# EUROPÄISCHE PATENTSCHRIFT

(11) **EP 1 158 182 B1**
(45) Veröffentlichungstag und Bekanntmachung des Hinweises auf die Patenterteilung: **08.12.2004**
(21) Anmeldenummer: 00111239.0
(22) Anmeldetag: 25.05.2000
(51) Int. Cl.: F15C 3/14, F16K 31/00, F15B 13/043

(54) **Ventileinrichtung**
Valve arrangement
Agencement de soupape

(43) Veröffentlichungstag der Anmeldung: 28.11.2001
(73) Patentinhaber: FESTO AG & Co, 73734 Esslingen (DE)
(72) Erfinder: Berger, Rolf, 72649 Wolfschlugen (DE); Maichl, Martin, 73084 Salach (DE); Hoffmann, Markus, 72649 Wolfschlugen (DE); Stingel, Jürgen, 70180 Stuttgart (DE); Soblik, Wolfgang, 73786 Remseck (DE); Weinmann, Michael, Dr., 73655 Plüderhausen (DE)
(74) Vertreter: Abel, Martin, Dipl.-Ing.

(56) Entgegenhaltungen:
- EP-A- 0 547 022
- EP-A- 0 619 210
- EP-A- 0 741 248
- EP-A- 0 875 701
- EP-A- 0 915 277
- WO-A-89/04935
- DE-A- 3 032 479
- DE-U- 29 901 855
- US-A- 3 654 963
- US-A- 5 779 218
- PATENT ABSTRACTS OF JAPAN vol. 012, no. 343 (M-741), 14. September 1988 (1988-09-14) & JP 63 101588 A (KOGANEI SEISAKUSHO), 6. Mai 1988 (1988-05-06)

## Beschreibung

Die Erfindung betrifft eine Ventileinrichtung, mit einem Ventilgehäuse, das eine Steuerkammer begrenzt, in die mehrere Fluidkanäle einmünden und in der eine zur Steuerung mindestens einer der Fluidkanalmündungen dienende, zwischen zwei Endpositionen schwenkbewegliche Steuerwippe angeordnet ist, deren Schwenkposition durch ein elektrisch aktivierbares Biegeelement beeinflussbar ist, das einenends gehäusefest verankert ist und zum anderen innerhalb der Steuerkammer auf eine dort befindliche Betätigungspartie der Steuerwippe einwirken kann, wobei die Steuerwippe ohne Mitwirkung des Biegeelementes in eine erste der beiden Endpositionen vorgespannt ist.

Bei einer aus der EP-A-0 915 277 bekannten Ventileinrichtung dieser Art befindet sich im Innern einer Steuerkammer eine schwenkbewegliche Steuerwippe, die über ein Koppelelement mit einem ebenfalls in der Steuerkammer angeordneten piezoelektrischen Biegeelement fest verbunden ist. Durch ein Magnetjoch wird die Steuerwippe unter Vorspannung in jeweils-einer von zwei möglichen Endpositionen gehalten. Je nach Betätigungseinrichtung übt das Biegeelement über das Koppelelement eine Zugkraft oder Druckkraft auf die Steuerwippe aus, um diese in die jeweils andere stabile Endposition umzuschalten.

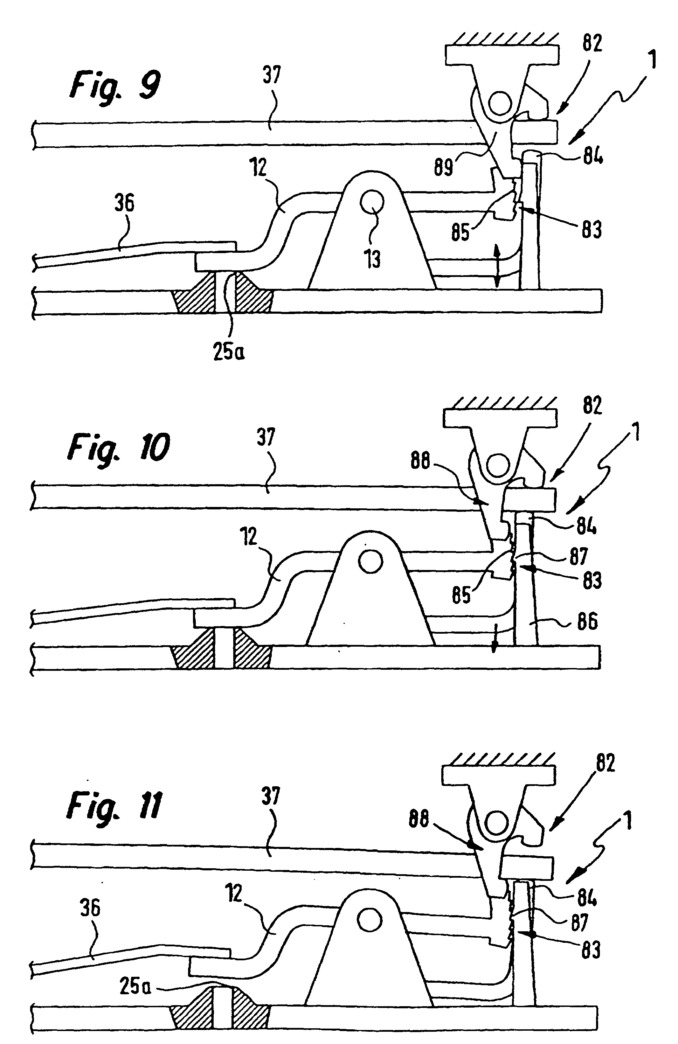

Die WO-A-89/04935 beschreibt eine ventileinrichtung, bei der auf eine schwenkbewegliche Steuerwippe unmittelbar ein Streifen aus piezoelektrischem Material aufgesetzt ist (Fig. 10).

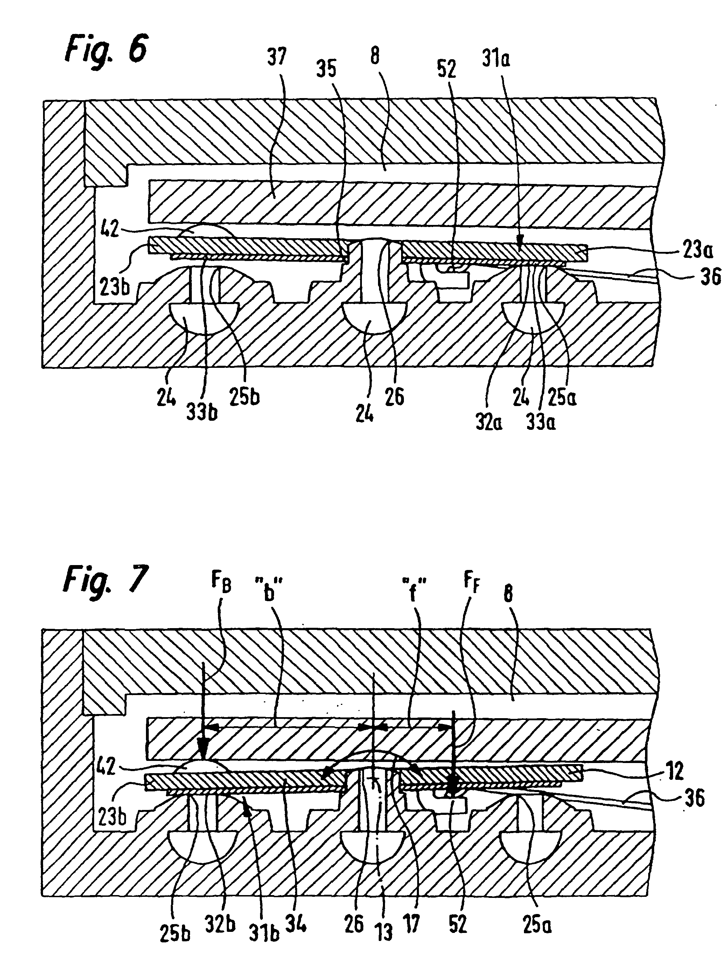

Soweit eine Betätigung der Steuerwippe mittels eines ohne feste Verbindung auf die Steuerwippe einwirkenden Betätigungselementes vorgesehen ist (Fig. 5), handelt es sich bei dem Betätigungselement um einen Klappanker, der durch eine Schraubenfeder gegen die Steuerwippe vorgespannt ist.

Bei einer aus der EP 0 741 248 A2 hervorgehenden Ventileinrichtung wird im Innern des Ventilgehäuses eine Steuerkammer definiert, in der eine schwenkbewegliche Steuerwippe angeordnet ist, die mit einer in Verlängerung der Schwenkachse ausgeführten Betätigungspartie aus der Steuerkammer des Ventilgehäuses herausragt. Auf die Betätigungspartie kann beispielsweise ein piezoelektrisches Biegeelement einwirken, um die Schwenkposition der Steuerwippe zu beeinflussen, die im Innern der Steuerkammer zwei Fluidkanalmündungen gegenüberliegt, die sie in Abhängigkeit von der Schwenkposition öffnen und verschließen kann. Eine ähnliche Ventileinrichtung geht auch aus der DE 29901855 U1 hervor, wobei allerdings im Vergleich zur EP 0 741 248 A2 die zu steuernden Fluidkanalmündungen auf einer Längsseite der Steuerwippe platziert sind.

Bei beiden vorgenannten Ventileinrichtungen sind umfangreiche Abdichtungsmaßnahmen erforderlich, um die Betätigungspartie ohne Leckage und unter Gewährleistung der Schwenkbeweglichkeit der Steuerwippe aus der Steuerkammer herausführen zu können. Außerdem bedarf es einer mechanischen Vorspannung des eventuell zur Betätigung verwendeten piezoelektrischen Biegeelementes, um die Steuerwippe in der Grundstellung in einer ihrer beiden Endpositionen vorzuspannen. Letzteres kann auf Grund mechanischer Relaxation des Biegeelementes zu Funktionsbeeinträchtigungen führen.

Eine vergleichbare Problematik ergibt sich bei der Ventileinrichtung gemäß US 5 779 218, wo das Piezo-Biegeelement zur Vorgabe einer gewünschten Endposition durch Aufbringen einer Vorspannkraft und anschließendes Vergießen in der eingenommenen Position fixiert wird.

Man hat daher in der EP 0 547 022 B1 bereits vorgeschlagen, die Relaxationsprobleme mittels einer auf das Piezo-Biegeelement einwirkenden mechanischen Feder zu kompensieren. Dies führt jedoch zu einer größeren Bauhöhe der Ventileinrichtung.

Es ist die Aufgabe der vorliegenden Erfindung, eine Ventileinrichtung der eingangs genannten Art zu schaffen, bei der das Relaxationsproblem in Verbindung mit einem einfachen und kompakten Ventilaufbau zumindest größtenteils ausgeräumt ist.

Zur Lösung dieser Aufgabe ist vorgesehen, dass die Steuerwippe durch Federmittel ständig in Richtung der ersten Endposition vorgespannt ist und dass das Biegeelement im elektrisch unerregten Zustand im wesentlichen mechanisch spannungsfrei und ohne Federvorspannung sowie ohne feste Verbindung direkt an der Betätigungspartie der die erste Endposition einnehmenden Steuerwippe anliegt.

Auf diese Weise wird erreicht, dass die Steuerwippe bei deaktiviertem Biegeelement in eine Endposition vorgespannt ist, wobei die hierzu eingesetzten Federkräfte unabhängig vom Biegeelement in die Steuerwippe eingeleitet werden, so dass das Biegeelement selbst im wesentlichen mechanisch spannungsfrei und dementsprechend auch relaxationsfrei an der Steuerwippe anliegen kann und folglich auch keine auf das Biegeelement einwirkende Federvorspannung zur Kompensation einer eventuellen Relaxationstendenz benötigt wird. Die Ventileinrichtung läßt sich daher relativ einfach zusammenbauen, weil das Biegeelement vollständig vorspannungsfrei oder zumindest mit nur geringer Vorspannung installiert werden kann, was beispielsweise durch einen bloßen Einlegevorgang stattfinden kann. Da des weiteren das Biegeelement innerhalb der Steuerkammer mit der Steuerwippe zusammenwirkt, entfallen problematisch abzudichtende Bereiche zwischen der Steuerwippe und dem Ventilgehäuse. Die Ventileinrichtung kann insgesamt mit sehr kompakten Abmessungen realisiert werden.

Vorteilhafte Weiterbildungen der Erfindung gehen aus den Unteransprüchen hervor.

Als elektrisch aktivierbares Biegeelement wird insbesondere ein Piezo-Biegeelement verwendet, wobei aber prinzipiell auch ein aus Formgedächtnismaterial (Memory-Metall) oder aus Bimetall ausgeführtes Biegeelement möglich wäre.

Auf Basis der Ventileinrichtung lassen sich mit wenig Aufwand unterschiedliche Ventiltypen realisieren, so beispielsweise eine "normaly closed"-Charakteristik oder eine "normalyopen"-Charakteristik.

Bei einer bevorzugten Ausgestaltung sind in der Steuerkammer zwei durch die Steuerwippe steuerbare Fluidkanalmündungen vorgesehen, die jeweils mit einem separaten Fluidkanal kommunizieren und die in den beiden Endpositionen der Steuerwippe abwechselnd verschlossen und freigegeben werden, wobei das Verschließen der jeweils einen Fluidkanalmündung das gleichzeitige Freigeben der jeweils anderen Fluidkanalmündung zur Folge hat. Dabei werden die beiden steuerbaren Fluidkanalmündungen vorzugsweise von unterschiedlichen Wippenarmen der Steuerwippe gesteuert und können somit, bei einem mehrteiligen Ventilgehäuse, am gleichen Gehäuseteil auf der gleichen Seite der Steuerwippe vorgesehen sein.

Zweckmäßigerweise trägt die Steuerwippe in dem zur Steuerung mit der jeweiligen Fluidkanalmündung zusammenarbeitenden Bereich eine Dichtmaterialschicht, wobei sich die Steuerwippe mit ihrer die Dichtmaterialschicht tragenden Seite vorzugsweise an einer gehäuseseitigen Lagerstelle schwenkbeweglich abstützt und im Abstützbereich eine in Material und Dicke der Dichtmaterialschicht entsprechende Materialschicht aufweist, die insbesondere zusammenhängend mit der Dichtmaterialschicht ausgeführt ist. Auf diese Weise wird erreicht, daß ein eventuelles Quellen des Dichtmaterials keinen Einfluß auf den zwischen der Steuerwippe und der zu steuernden Ventilkanalmündung befindlichen Ventilspalt hat. Da das Quellen des Dichtmaterials gleichzeitig auch ein identisches Quellen der im Abstützbereich vorhandenen Materialschicht zur Folge hat, tritt lediglich eine Parallelverlagerung der Steuerwippe auf, was den Ventilspalt praktisch nicht beeinflußt.

Zweckmäßigerweise ist die Anordnung so getroffen, daß sich das Biegeelement ausgehend von einer Befestigungsstelle, die bezüglich der Steuerwippe quer zu deren Schwenkachse beabstandet ist, hin zu der Steuerwippe erstreckt, wobei es die Steuerwippe auf der der mindestens einen zu steuernden Fluidöffnung entgegengesetzten Seite zumindest partiell übergreift. Die mit dem Biegeelement zusammenarbeitende Betätigungspartie der Steuerwippe kann hierbei auf der der Befestigungsstelle entgegengesetzten Seite der Schwenkachse mit Abstand zu dieser angeordnet sein. Dabei ist zweckmäßigerweise vorgesehen, daß die Federmittel auf der der Betätigungspartie entgegengesetzten Seite der Schwenkachse an der Steuerwippe angreifen. Hierbei läßt sich durch unterschiedliche Hebellängen eine optimale Anpassung an die Hub-Kraft-Kennlinie des Biegeelementes erzielen.

Die Befestigungsstelle für das Biegeelement kann bei Bedarf unmittelbar innerhalb der Steuerkammer vorgesehen sein. Bei einer ebenfalls vorteilhaften Ausführungsform befindet sich die Befestigungsstelle in einer zur Steuerkammer benachbarten Befestigungskammer des Ventilgehäuses, von der aus das Biegeelement mit seinem vorderen Endabschnitt in die Steuerkammer hineinragt. Die Befestigungskammer kann beispielsweise mit einer Vergußmasse ausgefüllt sein, um das Biegeelement zu fixieren und gleichzeitig eine Abdichtung der elektrischen Anschlüsse zu erhalten.

Es ist ferner von Vorteil, wenn die im elektrisch unerregten Zustand eingenommene Grundstellung des Biegeelementes derjenigen Stellung entspricht, die das Biegeelement beim Zusammenbau der Ventileinrichtung allein auf Grund seiner Gewichtskraft einnimmt, nachdem es auf die Betätigungspartie der Steuerwippe und auf mindestens eine gehäuseseitige Lagerstelle aufgelegt wurde. Hier ist eine toleranzunabhängige, spielfreie und justagefreie Einbaumöglichkeit des Biegeelementes allein auf Grund seines Eigengewichtes möglich.

Die die ausgewählte Endposition der Steuerwippe vorgebenden Federmittel sind zweckmäßigerweise unmittelbar in der Steuerkammer angeordnet. Dabei können die Federmittel so ausgeführt sein, daß sie gleichzeitig eine Haltefunktion auf die Steuerwippe ausüben. Es ist insbesondere von Vorteil, wenn die Federmittel mit zur Beaufschlagungskraft des Biegeelementes parallelgeschalteter Federkraft auf die Steuerwippe einwirken.

Bei einer konstruktiv besonders einfach realisierbaren Ausführungsform verfügen die Federmittel über mindestens eine einerseits gehäusefest verankerte und andererseits an der Steuerwippe angreifende Federzunge, wobei die Federzunge Bestandteil einer Federeinheit sein kann, die über einen Verankerungsabschnitt gehäuseseitig fixierbar ist. Zweckmäßigerweise besteht die gesamte Federeinheit, bei der der Verankerungsabschnitt und die Federzunge zweckmäßigerweise integral ausgebildet sind, aus federelastischem Material und beispielsweise aus Federstahl.

Bei einer anderen Ausführungsform der Federmittel wird die zur Vorspannung der Steuerwippe eingesetzte Federkraft durch mit der Schwenkachse gleichgerichtete Torsionsfederelemente erhalten, die sich zwischen der Steuerwippe und dem Ventilgehäuse erstrecken und die zweckmäßigerweise direkt die Schwenkachse definieren können. Die gehäuseseitige Befestigung der Torsionsfederelemente kann mittels Befestigungsteilen geschehen, die zwischen den Halteflächen zweier Gehäuseteile des Ventilgehäuses gehalten sind. Dabei können die Steuerwippe, die Torsionsfederelemente und die Befestigungsteile als integrale Baueinheit ausgeführt sein. Ferner ist die Anordnung vorzugsweise so getroffen, daß die Halteflächen des Ventilgehäuses so auf die Befestigungsteile einwirken, daß die Steuerwippe zum einen in die erste Endposition gezwungen wird und zum anderen eine zusätzliche Verdrehung der Torsionsfederelemente vorhanden ist, um die gewünschte Vorspannkraft hervorzurufen.

Die mit einem jeweiligen Befestigungsteil zusammenwirkenden Halteflächen befinden sich zweckmäßigerweise zum einen an einem Unterteil und zum anderen an einem Oberteil des Ventilgehäuses, wobei die Vorspannung unmittelbar beim Zusammenbau der beiden Gehäuseteile herbeigeführt wird.

Das Biegelement kann Bestandteil einer Antriebseinrichtung für die Steuerwippe sein, die außerdem über Mittel verfügt, um ein schrittweises Verschwenken der Steuerwippe zu ermöglichen, wobei die entsprechenden Mittel beispielsweise einen Sperrklinkenmechanismus oder einen Selbsthemmungsmechanismus definieren. Dies ermöglicht es, mit relativ kleinen Stellkräften des Biegeelementes und kleinen Schwenkhüben des Biegeelementes große Ventilsitzdurchmesser mit den sich daraus ergebenden großen Stellkräften und Öffnungshüben zu bewerkstelligen. Dabei kann eine Auslegung getroffen werden, bei der sich die Steuerwippe nach einmaligem Betätigen durch das Biegeelement um einen Schwenkschritt öffnet und nach einer neuerlichen Betätigung wieder schließt, um eine bistabile Ventilfunktion zu verwirklichen.

Die Steuerwippe und die zugehörigen Federmittel können zusammengefaßt als erste Steuereinheit bezeichnet werden. Zusätzlich zu dieser ersten Steuereinheit kann eine entsprechend aufgebaute zweite Steuereinheit vorhanden sein, die zur Steuerung mindestens einer weiteren Fluidkanalmündung dient, wobei die Steuerwippen beider Steuereinheiten gemeinsam durch das Biegeelement betätigbar sind. Dabei kann beispielsweise eine Auslegung dahingehend erfolgen, daß die Ventileinrichtung eine 3/3-Ventilfunktion ausübt. Bevorzugt wird die zweite Steuerwippe spiegelsymmetrisch zur ersten Steuerwippe auf der entgegengesetzten Seite des Biegeelementes angeordnet.

Es ist ferner von Vorteil, wenn Einstellmittel vorhanden sind, die eine veränderliche Vorgabe der bezüglich der zu steuernden Fluidkanalmündungen eingenommenen Position der Schwenkachse der Steuerwippe ermöglichen. Auf diese Weise läßt sich der Ventilspalt justieren. Dies kann vorzugsweise auch ohne die Anwesenheit des Biegeelementes beim Zusammenbau der Ventileinrichtung geschehen und ist vor allem dann zweckmäßig, wenn die ventileinrichtung über zwei Steuerwippen verfügt.

Sind Mittel vorhanden, die eine stufenlose Aufbringung der Betätigungsspannung für das Biegeelement gestatten, läßt sich sehr einfach ein stetiges Steuerverhalten der Steuerwippe realisieren, wobei sich beliebige Schwenkpositionen nach Bedarf vorgeben lassen.

Nachfolgend wird die Erfindung anhand der beiliegenden Zeichnung näher erläutert. In dieser zeigen:
- Fig. 1: eine bevorzugte Ausführungsform der erfindungsgemäßen Ventileinrichtung in einer perspektivischen Explosionsdarstellung,
- Fig. 2: die Ventileinrichtung aus Fig. 2 bei abgenommenem Oberteil und bei entferntem Biegeelement in einer Draufsicht von schräg oben her mit Blick gemäß Pfeil II aus Fig. 1,
- Fig. 3: die Anordnung aus Fig. 2 in einer leicht gedrehten Schrägansicht mit teilweise aufgebrochener Wand des Ventilgehäuses,
- Fig. 4: die Ventileinrichtung aus Fig. 1 bis 3 im Längsschnitt in der Grundstellung bei elektrisch unerregtem Biegeelement gemäß Schnittlinie IV-IV aus Fig. 3,
- Fig. 5: die Ventileinrichtung gemäß Fig. 1 bis 3 in einer der Fig. 4 entsprechenden Darstellungsweise im Längsschnitt gemäß Schnittlinie V-V aus Fig. 3,
- Fig. 6: den vorderen Endbereich der Ventileinrichtung aus Fig. 4 im Bereich der Steuerwippe in vergrößerter Darstellung,
- Fig. 7: den Ausschnitt der Ventileinrichtung gemäß Fig. 6 bei elektrisch erregtem Biegeelement und dementsprechend in die zweite Endposition verschwenkter Steuerwippe,
- Fig. 8: im Längsschnitt ein weiteres Ausführungsbeispiel der Ventileinrichtung, die mit zwei Steuereinheiten ausgestattet ist, um ein 3/3-Wegeventil zu realisieren,
- Fig. 9 bis 11: eine weitere Ausführungsform der Ventileinrichtung, die mit einem Sperrklinkenmechanismus zur Realisierung einer schrittweisen Schwenkbewegung der Steuerwippe ausgestattet ist, wobei die Figuren unterschiedliche Schaltstellungen zeigen,
- Fig. 12: in einer perspektivischen Explosionsdarstellung eine weitere Ausführungsform der erfindungsgemäßen Ventileinrichtung und
- Fig. 13: eine schräge Draufsicht auf die Ventileinrichtung der Fig. 12 bei eingelegter Steuerwippe vor der Installation des Biegeelementes und des aufzusetzenden deckartigen Oberteils.

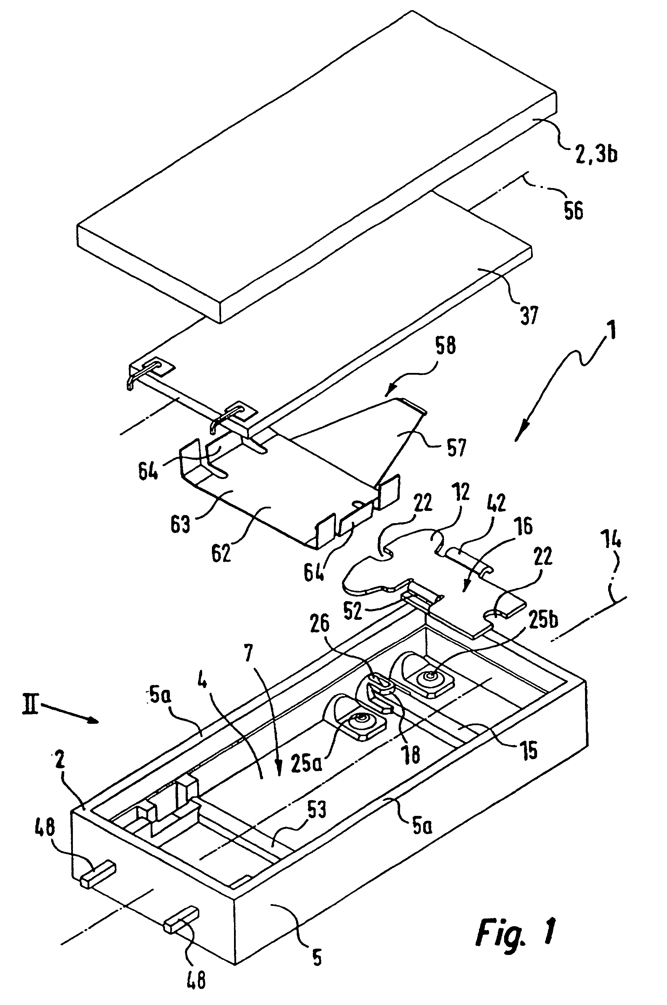

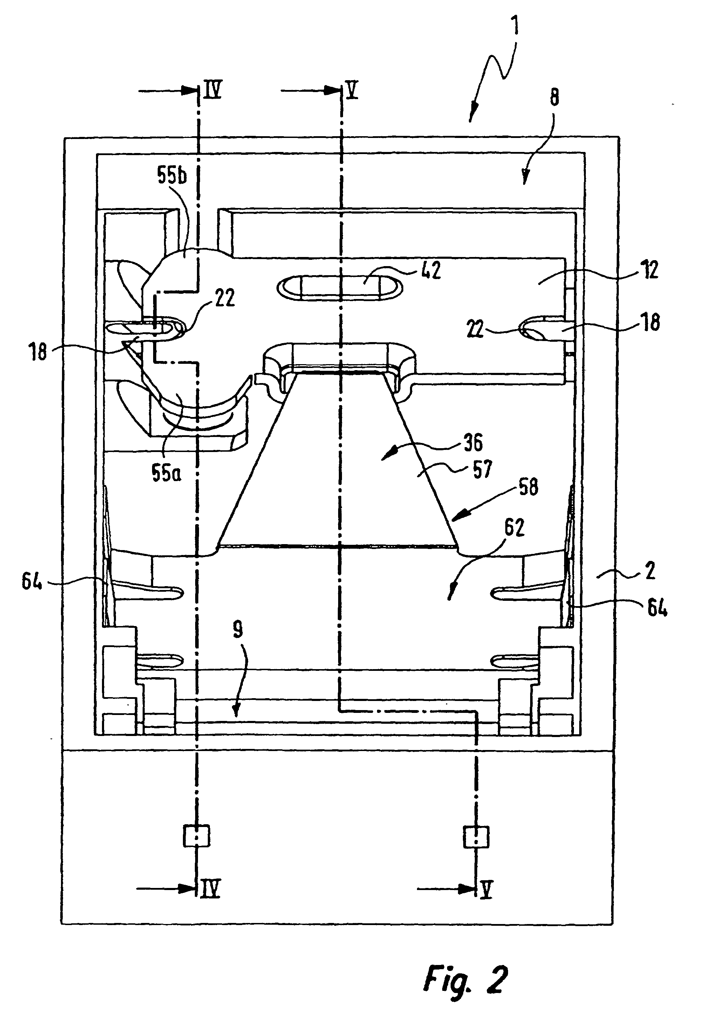

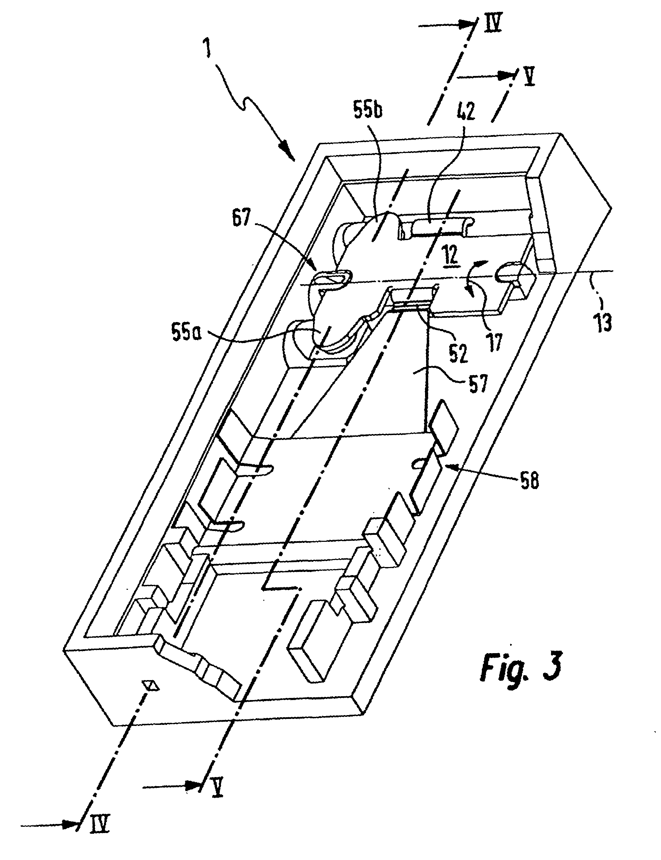

Zunächst bezugnehmend auf die Ausführungsform der Fig. 1 bis 7, verfügt die dort abgebildete Ventileinrichtung 1 über ein außen bevorzugt quaderförmig gestaltetes und beispielsgemäß über eine relativ flache Bauform verfügendes Ventilgehäuse 2. Dieses besteht vorzugsweise aus Kunststoffmaterial und hat einen mehrteiligen Aufbau. Beim Ausführungsbeispiel setzt es sich aus einem Unterteil 3a und einem Oberteil 3b zusammen, wobei das Unterteil einen rechteckförmig konturierten Boden 4 mit einer von dessen Rand hochragenden umlaufenden Seitenwand 5 aufweist.

An der dem Boden 4 entgegengesetzten Oberseite ist die Seitenwand 5 innen mit einer bevorzugt ringsumlaufenden Stufe abgestuft, so daß eine Aufnahme 6 definiert wird, in die das einen Deckel bildende und vorzugsweise plattenartig ausgebildete Oberteil 3b eingesetzt ist. Vorzugsweise durch eine Fügeverbindung wie Verkleben oder Verschweißen sind Unterteil 3a und Oberteil 3b fluiddicht fest miteinander verbunden, so daß auf die Zwischenfügung einer separaten Dichtung verzichtet werden kann.

Das Ventilgehäuse 2 definiert in seinem Innern einen flachen, länglichen Gehäuse-Innenraum 7, der in zwei in Längsrichtung aufeinanderfolgende Abschnitte unterteilt ist, die nachfolgend als Steuerkammer 8 und Befestigungskammer 9 bezeichnet seien. Den größten Teil der Innenraumlänge nimmt dabei die Steuerkammer 8 ein.

In dem der Befestigungskammer 9 entgegengesetzten vorderen Bereich der Steuerkammer 8 ist ein wippenartig verschwenkbares Bauteil plaziert, das zur Steuerung von Fluidströmen dient und daher als Steuerwippe 12 bezeichnet sei. Diese Steuerwippe 12 befindet sich komplett innerhalb der Steuerkammer 8 und ist um eine Schwenkachse 13 relativ zum Ventilgehäuse 2 verschwenkbar, die rechtwinkelig zur Längsachse 14 des Ventilgehäuses 2 und parallel zur Ausdehnungsebene des Bodens 4 verläuft.

Die Schwenkachse 13 wird beim Ausführungsbeispiel dadurch definiert, daß an der Innenseite des Bodens 4 an einer gehäuseseitigen Lagerstelle ein sich quer zur Längsachse 14 erstrekkender kuppenartiger Lagerungsvorsprung 15 vorgesehen ist, dessen nach oben weisende Fläche mit einem Radius leicht gerundet sein kann und auf dem die Steuerwippe mit ihrem das Schwenkzentrum bildenden Lagerungsbereich 16 gemäß Doppelpfeil 17 schwenkbeweglich bzw. nach Art einer Wippe zur einen oder anderen Seite hin kippbar ist.

Um die Steuerwippe 12 lagemäßig zu fixieren und an einem verrutschen zu hindern, steht sie außerdem, unter Gewährleistung der Schwenkbeweglichkeit, mit gehäuseseitigen Sicherungsmitteln 18 formschlüssig in Eingriff. Diese Sicherungsmittel 18 bestehen beim Ausführungsbeispiel aus Vorsprüngen, die an den beiden Endbereichen des Lagerungsvorsprunges 15 in unmittelbarer Nähe zur Innenfläche der beiden seitlichen Seitenwände 5a des Ventilgehäuses 2 ausgebildet sind und die in randseitige Aussparungen 22 der plattenähnlich flach ausgebildeten Steuerwippe 12 eingreifen.

Die Steuerwippe 12 enthält zwei beidseits der Schwenkachse 13 angeordnete erste und zweite Wippenarme 23a, 23b. Wird die Steuerwippe 12 verschwenkt, nähert sich jeweils der eine Wippenarm an den Boden 4 des Ventilgehäuses 2 an, während der andere Wippenarm, vergleichbar einem zweiarmigen Hebel, vom Boden 4 abgehoben wird. Die Steuerwippe 12 ist dabei ein in sich starres Bauteil.

In die Steuerkammer 8 münden mehrere Fluidkanäle 24 ein, beim Ausführungsbeispiel drei Stück, die andernends zur Außenfläche des Ventilgehäuses 2 geführt sind (nicht dargestellt), wo weiterführende Fluidkanäle anschließbar sind, beispielsweise in Gestalt von Fluidleitungen.

Mindestens eine der Fluidkanalmündungen im Innern der Steuerkammer 8 ist durch die Steuerwippe 12 hinsichtlich des Fluiddurchgangs steuerbar. Beim Ausführungsbeispiel sind zwei Fluidkanäle 24 jeweils mit einer steuerbaren Fluidkanalmündung versehen, die als erste und zweite steuerbare Fluidkanalmündungen 25a, 25b bezeichnet seien. Die dritte Fluidkanalmündung 26 ist ständig unverschlossen.

Die erste steuerbare Fluidkanalmündung 25a liegt dem ersten Wippenarm 23a gegenüber, die zweite steuerbare Fluidkanalmündung 25b befindet sich dem zweiten Wippenarm 23b gegenüberliegend. Auf diese Weise können die beiden steuerbaren Fluidkanalmündungen 25a, 25b von unterschiedlichen Wippenarmen der Steuerwippe 12 hinsichtlich ihres Öffnungsquerschnittes gesteuert werden. Bevorzugt liegen die beiden steuerbaren Fluidkanalmündungen 25a, 25b auf der gleichen Seite der Steuerwippe 12, wobei ihnen eine steuerseitige Wippenfläche 27 zugewandt ist, die sich über beide Wippenarme 23a, 23b hinweg erstreckt und zugleich quer zu der Steuerwippe 12 orientiert ist. Die steuerbaren Fluidkanalmündungen 25a, 25b werden somit auf der gleichen Seite der Steuerwippe 12 von dieser überdeckt und befinden sich an ein und demselben Ventilgehäuseteil, vorliegend am Boden 4 des Unterteils 3a.

Die steuerbaren Fluidkanalmündungen 25a, 25b wie auch die beim Ausführungsbeispiel durch den Lagerungsvorsprung 15 definierte Schwenklagerstelle für die Steuerwippe 12 befinden sich somit am gleichen Gehäuseteil.

Die Steuerwippe 12 läßt sich durch gemäß Doppelpfeil 17 erfolgendes Verschwenken um ihre Schwenkachse 13 wechselweise in zwei Endpositionen positionieren. In der aus Fig. 6 hervorgehenden ersten Endposition 31a liegt die Steuerwippe 12 mit einer am ersten Wippenarm 23a vorgesehenen ersten Verschlußpartie auf der ersten steuerbaren Fluidkanalmündung 25a auf und verschließt diese fluiddicht. In der aus Fig. 7 hervorgehenden entgegengesetzten zweiten Endposition 31b liegt die Steuerwippe 12 mit einer am zweiten Wippenarm 23b vorgesehenen zweiten Verschlußpartie 32b abdichtend auf der zweiten steuerbaren Fluidkanalmündung 25b auf. Dabei ist gleichzeitig immer der jeweils andere Wippenarm von der ihm zugeordneten steuerbaren Fluidkanalmündung abgehoben, so daß diese freigegeben ist. Durch entsprechende Schwenkpositionierung können somit die beiden steuerbaren Fluidkanalmündungen 25a, 25b abwechselnd verschlossen und freigegeben werden, wobei das Verschließen der jeweils einen Fluidkanalmündung mit dem Freigeben der jeweils anderen Fluidkanalmündung einhergeht.

Die Ventileinrichtung 1 läßt sich beispielsweise als 3/2-Wegeventil einsetzen. Dabei wird über den der ersten steuerbaren Fluidkanalmündung 25a zugeordneten Fluidkanal ständig ein Druckmedium eingespeist, beispielsweise Druckluft. Der der zweiten steuerbaren Fluidkanalmündung 25b zugeordnete Fluidkanal 24 ist als Entlüftungskanal ausgebildet und führt zur Atmosphäre. Der von der ständig offenen dritten Fluidkanalmünndung 26 ausgehende Fluidkanal bildet einen Arbeitskanal und ist mit einem Verbraucher verbindbar, beispielsweise einem durch Fluidkraft zu betätigenden Antrieb.

Somit ist der Arbeitskanal in der ersten Endposition 31a über die zweite steuerbare Fluidkanalmündung 25b entlüftet, während gleichzeitig der zur ersten steuerbaren Fluidkanalmündung 25a führende Speisekanal abgesperrt ist. In der zweiten Endposition 31b hingegen ist der Entlüftungskanal abgesperrt, und der Speisekanal steht über die freigegebene erste steuerbare Fluidkanalmündung 25a mit der offenen dritten Fluidkanalmündung 26 des Arbeitskanals in Verbindung. Dementsprechend kann das Druckmedium zwischen den jeweils offenen Fluidkanalmündungen überströmen, und zwar durch die Steuerkammer 8 hindurch.

Die beiden Verschlußpartien 32a, 32b sind jeweils von einer aus geeignetem Dichtungsmaterial bestehenden Schicht gebildet, die als erste und zweite Dichtmaterialschicht 33a, 33b bezeichnet sei und die an der entsprechenden Seite auf einen zweckmäßigerweise aus Metall bestehenden Grundkörper 34 der Steuerwippe 12 aufgebracht ist. Die steuerseitige Wippenfläche 27 wird somit zumindest partiell von der Oberfläche der Dichtmaterialschichten 33a, 33b gebildet.

Ein besonderer Vorteil der Steuerwippe 12 besteht darin, daß der Grundkörper 34 auch im Bereich der Schwenklagerstelle mit einer Materialschicht 35 beschichtet ist, die hinsichtlich Materialeigenschaften und Schichtdicke einer jeweiligen Dichtmaterialschicht 33a, 33b entspricht, wobei die Steuerwippe 12 mit der Materialschicht 35 auf der Oberseite des Lagerungsvorsprunges 15 aufliegt.

Bevorzugt erfolgt die Realisierung dahingehend, daß die Dichtmaterialschichten 33a, 33b zusammenhängend mit der Materialschicht 35 ausgeführt sind, wobei eine einheitliche Dichtmaterialschicht aufgebracht ist, die zumindest den größten Teil der steuerseitigen Wippenfläche 27 bilden kann.

Im Betrieb der Ventileinrichtung lassen sich Änderungen in der Schichtdicke des Dichtmaterials, beispielsweise durch Quellen desselben, nicht ausschließen. Dies würde normalerweise zu einer Änderung des Abstandes zur zugeordneten steuerbaren Fluidkanalmündung 25a, 25b führen. Da jedoch auch im Bereich der Lagerstelle eine entsprechende Materialschicht aufgebracht ist, wird die Dickenänderung des Dichtungsmaterials automatisch dadurch kompensiert, daß sich die gesamte Steuerwippe hebt und sich somit der Spalt zwischen dem Dichtungsmaterial und der den Dichtsitz bildenden Fluidkanalmündung 25a, 25b nicht verändert. Die Auswirkungen der Wärmeausdehnung auf den in Offenstellung vorhandenen Spalt bleibt minimal, da die relevante Materiallänge, also die Höhe der Steuerwippenkanten über den Ventilsitzen, sehr klein gehalten werden kann. Hinzu kommt, daß auch ein durch den in der Steuerkammer 8 anstehenden Innendruck hervorgerufenes Durchbiegen der Gehäuseteile 3a, 3b automatisch dadurch kompensiert wird, daß sich der Schwenk- bzw. Wipp-Punkt der Steuerwippe mit der Durchbiegung mitbewegt. Die Fügemaßtoleranz zwischen den beiden Gehäuseteilen 3a, 3b wirkt sich auf die Funktion der Ventileinrichtung überhaupt nicht aus, da alle relevanten Bauteile am Unterteil 3a vorgesehen sind und das Oberteil 3b keinen Einfluß auf die Funktionsteile des Ventils hat, und zwar auch nicht auf die nachstehend noch beschriebenen.

Die Ventileinrichtung 1 ist des weiteren mit Federmitteln 36 ausgestattet, die wie die Steuerwippe 12 vollständig im Innern der Steuerkammer 8 untergebracht sind und die direkt zwischen dem Ventilgehäuse 2 und der Steuerwippe 12 wirksam sind. Die Federmittel 36 stützen sich einerseits am Ventilgehäuse 2 ab und wirken andererseits so auf die Steuerwippe 12 ein, daß diese ohne Mitwirkung des noch zu erläuternden Biegeelementes in eine der Endpositionen vorgespannt ist, beim Ausführungsbeispiel in die erste Endposition 31a. Dies entspricht gleichzeitig der Grundstellung, die die Ventileinrichtung 1 im deaktivierten Zustand einnimmt.

Die Federmittel 36 wirken mit einer Federkraft F_{F} in einem Abstand zur Schwenkachse 13 auf die Steuerwippe 12 ein, der als erster Hebelarm "f" bezeichnet sei. Das dadurch hervorgerufene Drehmoment spannt die Steuerwippe 12 in die erste Endposition 31a vor.

Um die Steuerwippe 12 in die andere, zweite Endposition 31b umzuschalten, wird durch das elektrisch aktivierbare Biegeelement 37 einer in das Ventilgehäuse 2 integrierten Antriebseinrichtung 38 eine ein entgegengesetztes Drehmoment bewirkende Beaufschlagungskraft F_{B} in die Steuerwippe 12 eingeleitet. Die Krafteinleitung erfolgt an einer Betätigungspartie 42 der Steuerwippe 12, die mit einem Betrag beabstandet zur Schwenkachse 16 plaziert ist, der als zweiter Hebelarm "b" bezeichnet sei.

Dabei ist vorgesehen, daß sich die Krafteinleitungsstellen für die Federkraft F_{F} und die Beaufschlagungskraft F_{B} auf einander diametral entgegengesetzten Seiten der Schwenkachse 13 befinden, um in entgegengesetztem Schwenksinne auf die Steuerwippe 12 einwirken zu können.

Das erwähnte Biegeelement 37 könnte beispielsweise aus sogenanntem Memorymetall bestehen, das bei Umgebungstemperatur eine Grundstellung einnimmt, aus der es ausgelenkt wird, wenn es durch einen elektrischen Strom aufgeheizt wird, und in die es zurückkehrt, wenn es nach Unterbrechung des Stromflusses erkaltet. Bevorzugt kommt jedoch als Biegeelement 37 wie beim Ausführungsbeispiel ein Piezo-Biegeelement zum Einsatz, also ein aus piezoelektrischem Material bestehender balkenartiger Biegewandler, der am rückwärtigen Ende eingespannt ist, wobei sein vorderer Endbereich beim Anlegen einer Spannung quer zu seiner Längsachse seitwärts ausgelenkt wird.

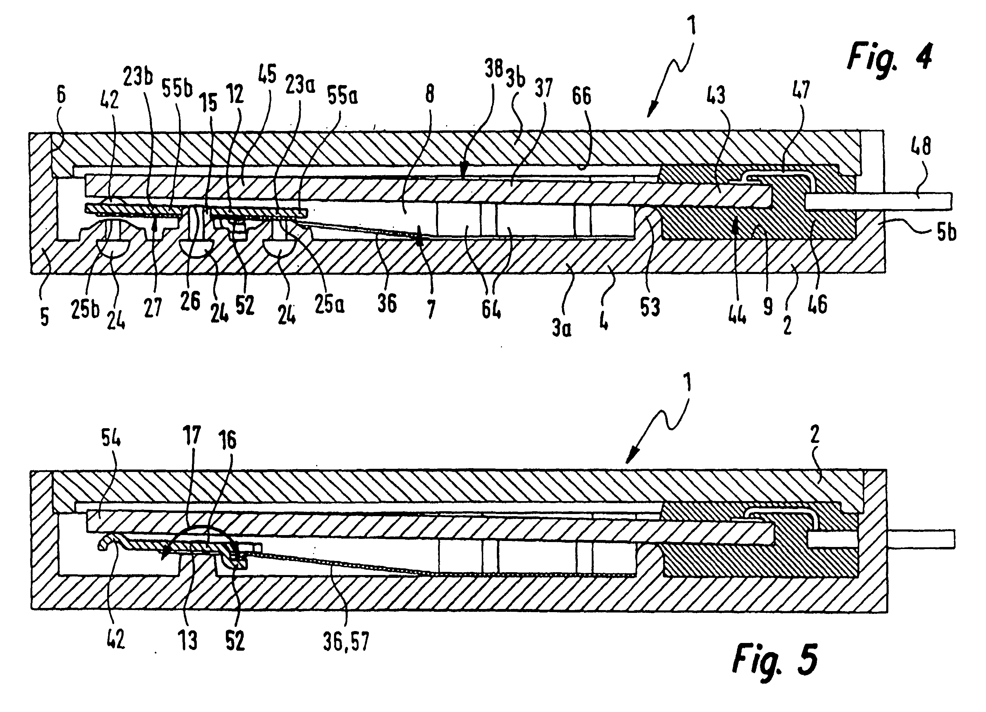

Wie aus Fig. 4 und 5 gut ersichtlich ist, erstreckt sich das Biegeelement 37 etwa in Längsrichtung des Ventilgehäuses 2 und ist in dem Gehäuse-Innenraum 7 untergebracht. Dabei ist es mit seinem rückwärtigen Endabschnitt 43 an einer in der Befestigungskammer 9 vorgesehenen Befestigungsstelle 44 fest verankert, von wo aus es mit seinem vorderen Endabschnitt 45 in die Steuerkammer 8 hinein zur Steuerwippe 12 ragt.

Die Verankerung des Biegeelementes 37 in der Befestigungskammer 9 erfolgt beim Ausführungsbeispiel durch eine die Befestigungskammer 9 ausfüllende und dabei den rückwärtigen Endabschnitt 43 des Biegeelementes 37 umschließende Vergußmasse 46. Diese kann dabei auch gleichzeitig die elektrischen Verbindungsleiter 47 und zugehörigen Anschlußstellen kapseln, über die eine Verbindung zu elektrischen Anschlußkontakten 48 hergestellt wird, die durch die rückseitige Seitenwand 5b des Ventilgehäuses 2 hindurch nach außen geführt sind, um das Anlegen einer Betriebsspannung zu ermöglichen.

Beim Ausführungsbeispiel befindet sich die Federkraft-Einleitungsstelle 52 für die Federmittel 36 auf der dem rückwärtigen Endabschnitt 43 zugewandten Längsseite der Schwenkachse 13 bzw. des Lagerungsbereiches 16. Die beispielsgemäß von einem als Erhebung ausgebildeten Abschnitt der Steuerwippe 12 gebildete Betätigungspartie 42 liegt auf der der Befestigungsstelle 44 entgegengesetzten Längsseite der Schwenkachse 16. Dementsprechend wird die Steuerwippe 12 von dem Biegeelement 37 auf der der steuerseitigen Wippenfläche 27 entgegengesetzen Oberseite von dem Biegeelement 37 zumindest partiell übergriffen. Die Steuerwippe 12 kann dabei von dem vorderen Endabschnitt 45 des Biegeelementes 37 vollständig überlappt werden.

Die Auslegung der Ventileinrichtung ist nun so getroffen, daß das Biegeelement 37 in seinem elektrisch unerregten Zustand, also bei nicht angelegter Betriebsspannung, eine aus Fig. 4 hervorgehende Grundstellung einnimmt, in der es innerhalb der Steuerkammer 8 zumindest im wesentlichen mechanisch spannungsfrei - also völlig spannungslos oder mit nur sehr geringer Vorspannung - auf der Betätigungspartie 42 aufliegt, wenn diese die durch die Federmittel 36 vorgegebene erste Endposition 31a einnimmt. Dabei ist relevant, daß die Federmittel ohne Zwischenschaltung des Biegeelementes 37 direkt auf die Steuerwippe 12 einwirken und das Biegeelement 37 selbst nicht unter einer Federvorspannung steht. Die von dem Biegeelement 37 in der Grundstellung in die Steuerwippe 12 eingeleitete Betätigungskraft F_{B} ist daher gleich Null.

Erst wenn über die elektrischen Ansschlußkontakte 48 die gewünschte Betriebsspannung in das Piezo-Biegeelement eingeleitet wird, wird durch die Biegetendenz des Biegeelementes 37 die Beaufschlagungskraft F_{B} hervorgerufen, die ein Umschalten bzw. Verschwenken der Steuerwippe 12 aus der vorgespannten ersten Endposition 31a in die zweite Endposition 31b bewirkt.

Wird die Betriebsspannung wieder weggenommen und das Biegeelement 37 entladen, kehrt das Biegeelement 37 in die Grundstellung zurück, und die Steuerwippe 12 wird gleichzeitig durch die Federmittel 36 in die erste Endposition 31 zurückgeschaltet.

Die Ventileinrichtung 1 ist beim Ausführungsbeispiel mit einer sogenannten "normaly closed"-Charakteristik ausgelegt, wobei durch die Federmittel 36 die einen Speisedruck führende erste steuerbare Fluidkanalmündung 25a bei deaktivierter Ventileinrichtung 1 abgesperrt ist. Durch einfaches Vertauschen der Kanalfunktionen der beiden steuerbaren Fluidkanalmündungen 25a, 25b ließe sich ohne weiteres auch eine Ventileinrichtung mit "normaly open"-Charakteristik realisieren.

Der mechanisch vorspannungsfreie Zustand des die elektrisch unerregte Grundstellung einnehmenden Biegeelementes 37 läßt sich beim Zusammenbau der Ventileinrichtung sehr einfach vorgeben. Die besagte Grundstellung entspricht nämlich derjenigen Stellung des Biegeelementes, die dieses einnimmt, nachdem es bei der Montage der Ventileinrichtung 1 bei abgenommenem Oberteil 3b in das bereits mit der Steuerwippe 12 und den Federmitteln 36 bestückte Unterteil 3a eingelegt wird. Dabei wird das Biegelement 37 mit seinem vorderen Endabschnitt 45 auf die Betätigungspartie 42 und mit seinem rückwärtigen Endabschnitt 43 auf eine im Gehäuse-Innenraum 7 am Unterteil 3a vorgesehene Lagerstelle 53 aufgelegt. Die Lagerstelle 53 ist dabei zweckmäßigerweise so ausgeführt, daß sich zusammen mit der Betätigungspartie 42 eine Dreipunktlagerung für das aufgelegte Biegeelement 37 ergibt. Die Lagerstelle 53 kann als sich quer zur Längsachse 14 erstreckende Bodenerhebung ausgeführt sein, die gleichzeitig als Trennwand zwischen der Befestigungskammer 9 und der Steuerkammer 8 wirkt.

Das entsprechend aufgelegte Biegeelement 37 wirkt allein mit seiner Gewichtskraft auf die Betätigungspartie 42 ein. In diesem Zustand wird der rückwärtige Endabschnitt 43 in der schon beschriebenen Weise fixiert, so daß sich der erwähnte, mechanisch spannungsfreie Zustand des Biegeelementes 37 einstellt.

Indem die beiden zweckmäßigerweise als Ventilsitze ausgebildeten steuerbaren Fluidkanalmündungen 25a, 25b auf der gleichen Seite der Steuerwippe 12 an ein und demselben Gehäuseteil 3a angebracht sind und eine gefederte Steuerwippe 12 zum Einsatz gelangt, besteht die für die Herstellung und Montage relevante Maßtoleranzkette nur noch aus einem einzigen Toleranzelement. Das Quellen des an der Steuermembran vorgesehenen Dichtungsmaterials, die mechanische Verbiegung des Gehäuses und die Fertigungstoleranz beim Zusammenfügen der beiden Gehäuseteile 3a, 3b haben praktisch keinen Einfluß auf die Funktionsfähigkeit des Ventils. Ferner wird eine Relaxation des Piezo-Biegeelementes 37 mit daraus resultierenden schädlichen Schalthubverlusten der Steuerwippe 12 vermieden, wobei von Vorteil ist, daß die Federmittel 36 nicht auf das Piezo-Biegeelement 37, sondern unmittelbar auf die Steuerwippe 12 einwirken. Ein aufwendiges Vorspannen des Piezo-Biegeelementes, wie dies beispielsweise in der US 5 779 218 beschrieben wird, entfällt, und da sich in der Grundstellung des Biegeelementes 37 durch die Federvorspannung der Steuerwippe 12 eine bestimmte Schaltstellung - entweder eine Schließstellung oder eine Offenstellung - vorgeben läßt, ohne den Piezo-Bieger hierbei mechanisch vorspannen zu müssen, kann auch auf eine zur Kompensation des Relaxationsverhaltens dienende Federvorspannung des Piezo-Biegeelementes 37, sei es durch mechanische oder elektrische Beaufschlagung des Biegeelementes 37, verzichtet werden. Daraus resultiert wiederum die aus der Zeichnung gut ersichtliche flache Bauweise des Ventilgehäuses 2.

Ein weiterer Vorteil der beschriebenen Ventileinrichtung 1 besteht darin, daß die von den steuerbaren Fluidkanalmündungen 25a, 25b gebildeten Ventilsitze relativ zum Biegeelement 37 nicht gesondert justiert werden müssen. Auch hat die bei der Herstellung unvermeidlich auftretende Dickentoleranz des Biegeelementes 37, also die in der Schwenkebene auftretenden Maßabweichungen, keinen Einfluß auf die Toleranzkette.

Ferner besteht bei der Ventileinrichtung 1 die Möglichkeit, durch gegenseitige Abstimmung der Länge der ersten und zweiten Hebelarme "f" bzw. b" eine optimale Anpassung an die Hub-Kraft-Kennlinie des Biegelementes 37 vorzunehmen. Durch die Verwendung einer Steuerwippe 12 mit unterschiedlichen Hebelarmlängen kann eine größere mechanische Energie aus dem Biegeelement 37 entnommen werden, so daß sich bei gleicher Federkraft F_{F} ein größerer Schalthub und/oder bei gleichem Schalthub eine größere Betätigungskraft erzielen läßt. Eine problemlose Anpassung an die Hub-Kraft-Kennlinie des Biegeelementes 37 ist möglich. Dabei wird unter dem Schalthub der Abstand der Verschlußpartien 32a, 32b von der zugeordneten steuerbaren Fluidkanalmündung 25a, 25b bei durch Einnahme einer Endposition vorhandener Offenstellung der entsprechenden steuerbaren Fluidkanalmündung verstanden. Der Schalthub ist folglich abhängig vom Schwenk- bzw. Wippwinkel der Steuerwippe 12 und vom Abstand der Verschlußpartien 32a, 32b von der Schwenk- bzw. Wippachse 16. Es ist somit offensichtlich, daß der Abstand der steuerbaren Fluidkanalmündungen 25a, 25b von der Schwenkachse 13 unterschiedlich groß gewählt werden kann, um für unterschiedlich gewählte Durchmesser der steuerbaren Fluidkanalmündungen 25a, 25b verschiedene, entsprechend geeignete Schalthübe zu realisieren.

Das Schaltverhalten der Ventileinrichtung 1 läßt sich auch durch Verwendung von Federmitteln 36 mit schwächerer oder stärkerer Federkraft beeinflussen.

Ein weiterer Vorteil der Ventileinrichtung 1 besteht darin, daß das Zusammenwirken des Biegeelementes 37 mit der Steuerwippe 12 zur Umgebung hin gekapselt in der Steuerkammer 8 im Innern des Gehäuse-Innenraumes 7 erfolgt, so daß von der Steuerwippe 12 keine abzudichtende bewegliche Verbindung zu Bereichen außerhalb des Gehäuse-Innenraumes 7 geführt werden muß. Weiter ist von Vorteil, daß das Biegeelement 37 selbst keine Dichtfunktion hinsichtlich der Ventilsitze bzw. steuerbaren Fluidkanalmündungen 25a, 25b übernimmt, so daß das Biegeelement 37 im Kontaktbereich mit der Betätigungspartie 32 einen Werkstoff aufweisen kann, der hinsichtlich der auftretenden Reibkräfte optimiert ist. Reibung tritt in dem besagten Kontaktbereich auf, weil der Schwenkradius der Betätigungspartie 32 geringer ist als derjenige des mit der Betätigungspartie 32 in Kontakt stehenden Beaufschlagungsabschnittes 54 des Biegeelementes 37, so daß letzterer und die Betätigungspartie 32 beim Schaltvorgang aneinander abgleiten.

Die beispielsgemäße Ventileinrichtung 1 zeichnet sich auch dadurch aus, daß beim Zusammenbau noch vor der Installation des Biegeelementes 37 eine Dichtheitsprüfung hinsichtlich des korrekten Verschließens der steuerbaren Fluidkanalmündungen 25a, 25b durch die Steuerwippe 12 möglich ist. Ferner kann, nach dem Einlegen und Fixieren des Biegeelementes 37, jedoch vor dem durch Anbringen des Oberteils 3b erfolgenden endgültigen Verschließen der Ventileinrichtung 1, eine Funktionsprüfung vorgenommen werden, um noch rechtzeitig eventuell erforderliche Korrekturen an den installierten Komponenten vornehmen zu können. Hier wirkt sich vorteilhaft aus, daß das Oberteil 3b eine reine Abdeckfunktion und keine Haltefunktion ausübt.

Beim Ausführungsbeispiel erfolgt die Krafteinleitung der Beaufschlagungskraft F_{B} in die Steuerwippe 12 praktisch am äußersten vorderen Endbereich des Biegeelementes 37, so daß dessen möglicher Schwenkweg optimal ausgenutzt werden kann.

Wie aus Fig. 1 bis 3 hervorgeht, befinden sich die beiden Verschlußpartien 32a, 32b zweckmäßigerweise an zwei flügelartig nach einander entgegengesetzten Richtungen von der Schwenkachse 13 wegragenden ersten und zweiten Steuerpartien 55a, 55b, die, wie auch die steuerbaren Fluidkanalmündungen 25a, 25b mit Abstand seitlich neben der Längsachse 14 des Ventilgehäuses 2 in der Nähe einer der beiden seitlichen Seitenwände 5a plaziert sind. Hingegen befinden sich die Betätigungspartie 42 und die Federkaft-Einleitungsstelle 52 zweckmäßigerweise in der Ebene der Längsachse 14, in der auch die Längsachse 56 des Biegeelementes 37 verläuft. Die Ausbildung der Verschlußpartien 32a, 32b kann somit unbeeinträchtigt von denjenigen Bereichen erfolgen, in denen Stellkräfte in die Steuerwippe 12 eingeleitet werden.

Beim Ausführungsbeispiel der Fig. 1 bis 7 sind die Federmittel 36 von mindestens einer und beim Ausführungsbeispiel von genau einer Federzunge 57 gebildet, die als Bestandteil einer Federeinheit 58 ausgeführt ist und über einen Verankerungsabschnitt 62 der Federeinheit 58 gehäusefest verankert ist. Die Federeinheit 58 ist zweckmäßigerweise ein integrales, aus federelastischem Material wie Federstahl bestehendes Bauteil, wobei der Verankerungsabschnitt 62 eine Flachgestalt aufweisende Tragpartie 63 mit seitlich beidseits daran angeordneten federelastischen Krallen aufweist, wobei die Breite des Verankerungsabschnittes 62 im unmontierten Zustand und unter Berücksichtigung der Krallen 64 geringfügig größer ist als die zwischen den beiden seitlichen Seitenwänden 5a gemessene Innenbreite der Steuerkammer 8. Die plattenähnlich ausgebildete Tragpartie 63 ist integral mit dem einen Ende der Federzunge 57 verbunden, die zungenartig von der Vorderseite der Tragpartie 63 wegragt.

Die Federeinheit 58 ist in der Steuerkammer 8 zwischen der Steuerwippe 12 und der Befestigungskammer 9 bzw. der diese begrenzenden Lagerstelle 53 montiert. Die Montage erfolgt dadurch, daß die Federeinheit 58 mit dem Verankerungsabschnitt über die offene Oberseite des Unterteils 3a in die Steuerkammer 8 eingesetzt wird, bis sie mit ihrer Tragpartie 63 an der Innenfläche des Bodens 4 anliegt. Dabei geraten gleichzeitig die Krallen 64 mit der Innenfläche der seitlichen Seitenwände 5a in Kontakt, wobei sie entgegen einer federnden Rückstellkraft geringfügig ausgelenkt werden und sich kraft der daraus resultierenden Vorspannung im Kunststoffmaterial der seitlichen Seitenwände 5 verkrallen. Auf diese Weise ist die Federeinheit 58 ohne zusätzliche Befestigungselemente im Unterteil 3a fixiert.

Die Federzunge 57 ragt dabei nach vorne in Richtung zur Steuerwippe 12 und greift mit ihrem vorderen Ende 65 an der Federkraft-Einleitungsstelle 52 der Steuerwippe 12 an.

Die Federzunge 57 kann vor der Montage der Federeinheit 58 in einer Ebene mit der Tragpartie 63 verlaufen oder aber, zu ihrem vorderen Ende 65 hin, leicht schräg ansteigen. Jedenfalls ist die Anordnung so getroffen, daß die Federzunge 57 bei installierter Federeinheit 58 mit der gewünschten Federkraft F_{F} auf die Steuerwippe 12 einwirkt.

Die Steuerwippe 12 und die Federzunge 57 sind somit, in Richtung quer zur Schwenkachse 13, aufeinanderfolgend angeordnet. Diese Richtung kann als Aufreihungsrichtung bezeichnet werden. Das Biegeelement 37 übergreift dabei die Federzunge 57 und die Steuerwippe 12 mit zur Aufreihungsrichtung paralleler Ausrichtung.

Indem die Federeinheit 58 im Ventilgehäuse 2 verankert ist und mit ihrem vorderen Ende 65 die Steuerwippe 12 von oben her in Richtung des Bodens 4 beaufschlagt, wird vorteilhafterweise erreicht, daß die Steuerwippe 12 durch die Federeinheit 58 bzw. die Federmittel 36 am Ventilgehäuse 2 gehalten wird. Weitere Haltemittel sind nicht erforderlich.

Das Biegeelement 37 wirkt zweckmäßigerweise direkt auf die Steuerwippe 12 ein, ohne zwischengeschaltete Federmittel. Die die Vorspannung der Steuerwippe 12 in die erste Endposition 31a bewirkenden Federmittel 36 beaufschlagen die Steuerwippe 12 so, daß sich eine Art Parallelschaltung der Federkraft F_{F} und der Beaufschlagungskraft F_{B} ergibt.

Das die Deckelfunktion übernehmende Oberteil 3b des Ventilgehäuses 2 kann über eine oder mehrere Ausnehmungen 66 verfügen, die eine Umströmung bzw. Hinterlüftung des Biegeelementes 37 mit Druckmedium ermöglichen, um einem unerwünschten Anhaften des Biegeelementes 37 am Oberteil 3b entgegenzuwirken.

Da die Fluidkanäle 24 zwischen ihren in der Steuerkammer 8 liegenden Fluidkanalmündungen 25a, 25b, 26 und den an der Außenfläche des Ventilgehäuses 2 liegenden, nicht näher dargestellten Kanalöffnungen relativ kurz ausgeführt werden können, ergibt sich entsprechend eine optimal kurze Fluidführung.

Bei Bedarf kann eine zusätzliche Haltefunktion des Oberteils 3b in bezug auf die Federeinheit 58 vorgesehen sein. Hierzu kann die Anordnung so getroffen werden, daß das Oberteil 3b im in die Aufnahme 6 eingesetzten Zustand mit seiner randnahen Innenfläche auf die nach oben ragenden Enden der Krallen 64 einwirkt und sie nach Art eines Niederhalters so fixiert, daß der Anlagekontakt zwischen der Tragpartie 63 und dem Boden 4 gewährleistet bleibt.

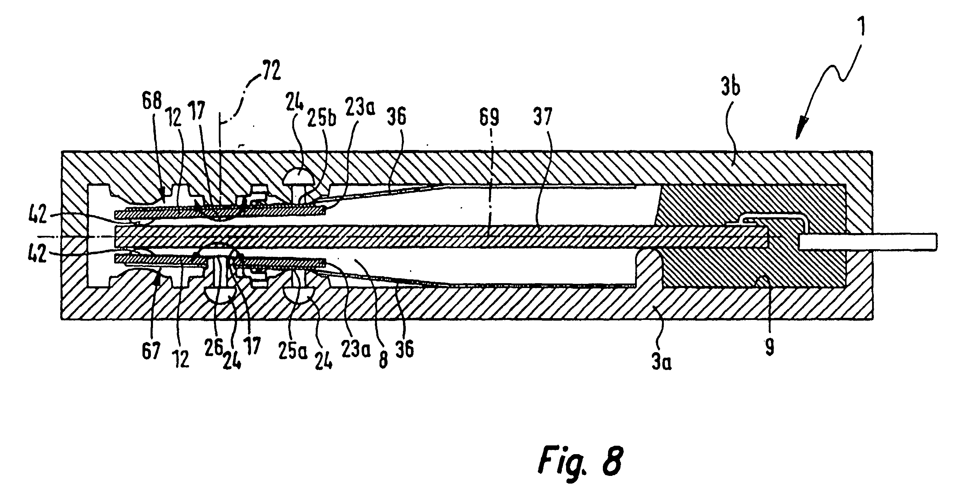

Aus Fig. 8 geht eine etwas abgewandelte Bauform der Ventileinrichtung 1 hervor, wobei einander entsprechende Bauteile mit identischen Bezugszeichen versehen sind.

Während bei der Ausführungsform der Fig. 1 bis 7 im Innern des Ventilgehäuses 2 lediglich eine einzige, sich aus der Steuerwippe 12 und den Federmitteln 36 zusammensetzende Steuereinheit vorhanden ist - als erste Steuereinheit 67 bezeichnet -, verfügt die Ausführungsform der Fig. 8 über eine zusätzliche zweite Steuereinheit 68, die vergleichbar der ersten Steuereinheit 67 ausgebildet ist und sich auf der der ersten Steuereinheit 67 entgegengesetzten Längsseite des Biegeelementes 37 befindet. Die beiden Steuereinheiten 67, 68 sind dabei zweckmäßigerweise bezüglich der Erstreckungsebene 69 des elektrisch unerregten Biegeelementes 37 spiegelsymmetrisch ausgebildet und angeordnet. Um eine optimale Unterbringung zu ermöglichen, kann dabei auch das Oberteil 3b vergleichbar dem Unterteil 3a mit umlaufenden Seitenwänden 5 versehen sein.

Die geänderte Ausführungsform wird verwendet, um besondere Ventilfunktionalitäten zu realisieren. Beim Ausführungsbeispiel ergibt sich eine 3/3-Ventilfunktion. Dabei sind die beiden steuerbaren Fluidkanalmündungen 25a, 25b jeweils einer der beiden Steuerwippen zugeordnet und befinden sich zweckmäßigerweise im Bereich des ersten Wippenarmes 23a, der durch die Federmittel 36 in die erste Endposition vorgespannt ist, so daß in der unerregten Grundstellung des Biegeelementes 37 beide steuerbaren Fluidkanalmündungen 25a, 25b verschlossen sind. Die ständig offene dritte Fluidkanalmündung 26 kann wie gehabt verbleiben oder an anderer Stelle in der Steuerkammer 8 vorgesehen sein, was im übrigen auch für die Ausführungsform der Fig. 1 bis 7 gilt.

Auf diese Weise kann eine in der elektrisch unerregten Grundstellung des Biegeelementes 37 normalerweise geschlossene Version eines 3/3-Ventils erzielt werden.

Das Biegeelement 37 ist so ausgeführt, daß es durch entsprechend gepolte Anlegung der Betriebsspannung bidirektional, also in zwei einander entgegengesetzten Richtungen, gezwungen ausgelenkt werden kann. Je nach Auslenkungsrichtung läßt sich dabei eine der zuvor noch geschlossenen steuerbaren Fluidkanalmündungen 25a, 25b zur Verbindung mit der offenen dritten Fluidkanalmündung 26 freigeben, während die andere steuerbare Fluidkanalmündung verschlossen bleibt.

Durch die Möglichkeit, das insbesondere als Biegewandler ausgebildete Biegeelement 37 stetig mit einer Betätigungsspannung anzusteuern, sind beliebige Zwischenstellungen möglich, so daß sich die Ventileinrichtung sehr gut für Positionierund Proportionalaufgaben eignet. Eine stetige Ansteuerung durch stufenlose Aufbringung der Betriebsspannung ist im übrigen auch bei der Ventileinrichtung gemäß Fig. 1 bis 7 möglich.

Durch die gegenüberliegende Anordnung der beiden Steuerwippen 12 können beim Zusammenbau toleranzbedingte Probleme auftreten. Um gleichwohl ein genaues Montieren und Justieren des entsprechenden Gehäuseteils zu ermöglichen, kann das bereits vormontierte Biegeelement als Sensor verwendet werden. Berührt die Steuerwippe das Biegeelement 37, erhält man einen Spannungsimpuls. Damit lassen sich die Gehäuseteile bzw. die zweite Steuerwippe spielfrei ohne Vorspannung an das Biegeelement 37 anlegen.

Es ist auch möglich, wie in Fig. 8 strichpunktiert angedeutet, zusätzliche Einstellmittel 72 vorzusehen, die sich an einem Gehäuseteil des Ventilgehäuses 2 abstützen und im Bereich des Lagerungsvorsprunges 15 so auf die Steuerwippe 12 einwirken, daß die Position der Schwenkachse 13 bezüglich der zu steuernden Fluidkanalmündungen verändert wird. Hier wird praktisch die ventilgehäuseseitige Lagerfläche, an der die Steuerwippe 12 anliegt, rechtwinkelig zur Ausdehnungsebene 69 justiert. Dadurch ist eine noch bessere Ausnutzung des Schwenkweges des Biegeelementes 37 möglich, wobei die Justierung auch in Abwesenheit des Piezo-Biegers erfolgen kann.

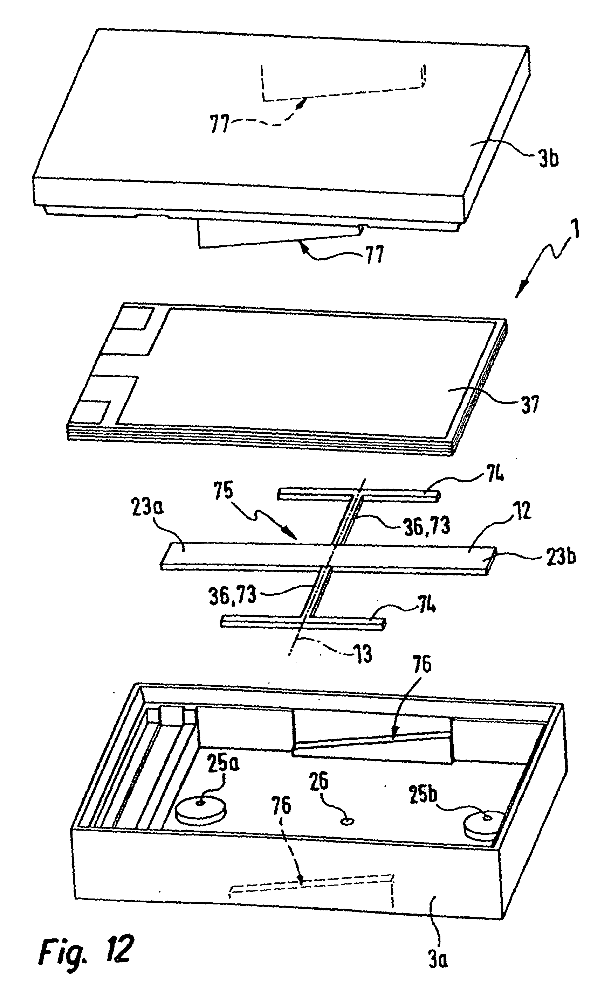

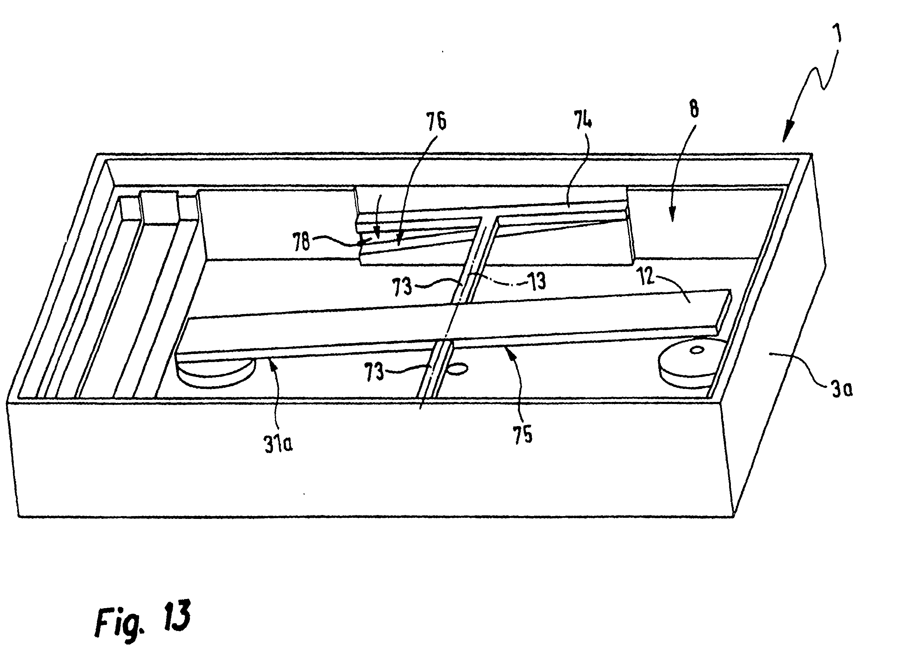

Bei der in Fig. 12 und 13 gezeigten weiteren Ausführungsform der Ventileinrichtung sind wiederum einander entsprechende Bestandteile mit identischen Bezugszeichen versehen. Diese Bauform zeichnet sich vor allem durch eine andere Realisierungsform der Federmittel 36 aus.

So sind hier die Federmittel 36 von mit der Schwenkachse 13 gleichgerichteten, die Schwenkachse 13 zweckmäßigerweise unmittelbar definierenden stabähnlichen Torsionsfederelementen 73 gebildet. Von jeder in Richtung der Schwenkachse 13 orientierten Längsseite der Steuerwippe 12 ragt, in zueinander koaxialer Anordnung, ein derartiges Torsionsfederelement 73 weg und trägt an seinem der Steuerwippe 12 entgegengesetzten äußeren Ende ein quer zur Schwenkachse 13 verlaufendes und vorzugsweise ebenfalls stabähnliches Befestigungsteil 74. Dabei sind die Steuerwippe 12, die Torsionsfederelemente 73 und die Befestigungsteile 74 vorzugsweise als integrale Baueinheit 75 aus Metall oder Kunststoffmaterial ausgebildet. Dabei ist zweckmäßigerweise vorgesehen, daß die Steuerwippe 12 und die Befestigungsteile 74 im noch nicht montierten Zustand in einer gemeinsamen Ebene angeordnet sind. Die Baueinheit 75 läßt sich daher sehr einfach als Stanzteil herstellen.

Im montierten Zustand der Baueinheit 75 sind die beiden Befestigungsteile 74 jeweils zwischen quer zur Schwenkachse 13 orientierten ersten und zweiten Halteflächen 76, 77 eingespannt, die an den beiden Gehäuseteilen 3a, 3b, einander paarweise gegenüberliegend, vorgesehen sind. Diese Halteflächen 76, 77 haben einen Schrägverlauf mit bezüglich der Ausdehnungsebene des Biegeelementes 37 stärkerer Neigung als die in einer Endposition befindliche Steuerwippe 12. Wird daher die Baueinheit 75 beim Zusammenbau der Ventileinrichtung 1 so in das Unterteil 3a eingelegt, daß die erste Endposition 31a vorliegt, ergibt sich zwischen den Befestigungsteilen 74 und der jeweils zugeordneten schrägen ersten Haltefläche 76 des Unterteils 3a ein sich keilförmig verjüngender Zwischenraum 78.

Wird anschließend, nach dem vorherigen Einlegen des Biegeelementes 37, das Oberteil 3b angesetzt, wirkt dieses mit den zweiten Halteflächen 77 von oben her auf die Befestigungsteile 74 ein. Diese werden dabei um die Schwenkachse 13 als Drehachse relativ zu der in der ersten Endposition 31a gehaltenen Steuerwippe 12 verdreht, wobei sich der Zwischenraum 78 allmählich schließt, bis schließlich die Befestigungsteile 74 eine der Neigung der zueinander parallelen Halteflächen 76, 77 entsprechende Schrägausrichtung eingenommen haben. Da diese steiler ist als diejenige der Steuerwippe 12, ergibt sich eine Torsion der stabähnlichen Torsionsfederelemente 73 um einen gewissen Drehwinkel mit Bezug zur vorspannungslosen Neutralstellung. Dies führt zu einer Federkraft, die ein Drehmoment auf die Steuerwippe 12 ausübt und diese mit der gewünschten Intensität in die erste Endposition 31 vorspannt.

Die Fig. 9 bis 11 zeigen einen Ausschnitt eines weiteren Ausführungsbeispiels der Ventileinrichtung 1 in verschiedenen Betätigungsstadien. Bei dieser Ventileinrichtung liegt die Besonderheit darin, daß das Biegeelement 37 Bestandteil einer Antriebseinrichtung 82 für die Steuerwippe 12 ist, die über Positioniermittel 83 verfügt, die ein schrittweises Verschwenken der Steuerwippe 12 ermöglichen und beim Ausführungsbeispiel nach Art eines Sperrklinkenmechanismus ausgebildet sind. Die Darstellungen der Fig. 9 bis 11 sind im übrigen stark schematisiert und sollen lediglich den prinzipiellen Aufbau verdeutlichen.

Durch die als Sperrklinkenmechanismus ausgebildeten Positioniermittel 83 ist ein schrittweises Verschwenken der Steuerwippe 12 und somit eine schrittweise Ventilbetätigung möglich. Dabei drückt das Biegeelement 37 mehrmals nacheinander auf einen beweglichen Stellarm 84, der eine nicht näher dargestellte erste Verzahnung trägt, welche einer an der Steuerwippe 12 vorgesehenen zweiten Verzahnung 85 gegenüberliegt. Bei jeder Beaufschlagung durch das Biegeelement 37 wird der Stellarm 84 verlagert, wobei die erste Verzahnung mit der zweiten Verzahnung 85 in Eingriff gelangt und die Steuerwippe ein Stück weit verdreht. Dieser Betätigungsvorgang geht aus Fig. 10 und 11 hervor.

Beim Verschwenken rastet die zweite Verzahnung 85 an einer an einem federelastisch schwenkbeweglichen Schwenkhebel 86 vorgesehenen dritten Verzahnung 87 entlang, die auch nach der Rückstellung des Biegeelementes 37 mit der zweiten Verzahnung 85 in Eingriff bleibt, um die momentan erreichte Schwenkposition zu fixieren. Mit jedem weiteren Biegehub des Biegeelementes 37 kann auf diese Weise die Steuerwippe 12 um einzelne Drehwinkelabschnitte weitergetaktet und dementsprechend eine steuerbare Fluidkanalmündung 25a schrittweise geöffnet werden.

Es können somit trotz relativ kleiner Beaufschlagungskräfte FB und kleinen Schwenkhüben des Biegeelementes 37 große Ventilsitzdurchmesser mit den sich daraus ergebenden großen Stellkräften und Schalthüben bewältigt werden.

Die durch die Federmittel 36 bewirkte Rückstellung der Steuerwippe 12 in die anfängliche erste Endposition 31 kann beispielsweise dadurch erreicht werden, daß der Schwenkhebel 83 bei Erreichen der zweiten Endposition der Steuerwippe 12 außer Eingriff mit der Steuerwippe 12 gebracht wird und diese dann zurückfedert.

Der schrittweise Schaltvorgang kann anstelle einer stufenweisen Betätigung auch stufenlos realisiert werden, wenn anstelle eines Sperrklinkenmechanismus ein auf Reibschluß basierender Selbsthemmungsmechanismus zum Einsatz kommt.

Die Rückstellung der Steuerwippe 12 kann, wie aus Fig. 9 bis 11 ersichtlich, auch durch einen zusätzlichen. Rückstellmechanismus 88 hervorgerufen oder unterstützt werden. Dabei wird durch elektrische Umpolung und/oder bidirektionalen Betrieb des Biegeelementes 37 eine von der Steuerwippe 12 weggerichtete Auslenkungsbewegung des Biegeelementes 37 hervorgerufen, so daß das Biegelement 37 auf ein bewegliches Entsperrglied 89 einwirkt, das den Schwenkhebel 86 vorübergehend so auslenkt, daß die zweiten und dritten Verzahnungen 85, 87 außer Eingriff gelangen.

Es kann auch vorgesehen sein, daß das Biegeelement 37 schon in seiner elektrisch unerregten Grundstellung derart auf das Entsperrglied 39 einwirkt, daß dieses die vorerwähnten Verzahnungen außer Eingriff hält.

Zum Öffnen des Ventils wird hier zwischen einer niedrigen Spannung und einer höheren Spannung gewechselt, um während des Taktungsvorganges ein Entriegeln zu verhindern. Beim Ausschalten der Stromversorgung oder bei einem störungsbedingten Ausfall der Betriebsspannung schaltet das Biegeelement 37 selbsttätig in die Grundstellung und verursacht die Entriegelung, so daß die steuerbare Fluidkanälmündung verschlossen wird. Auf diese Weise liegt eine sogenannte Fail-safe-Funktion vor.

Durch die Positioniermittel 83 besteht insgesamt die Möglichkeit, durch ein- oder mehrmaliges Betätigen des Biegeelementes 37 ein allmähliches, schrittweises Öffnen des Ventils zu realisieren.

Man kann die Auslegung auch so treffen, daß sich die Steuerwippe 12 nach einmaligem Betätigen durch das Biegeelement 37 um einen Drehschritt in die eine Richtung verdreht, um nach einer darauffolgenden zweiten Betätigung wieder in die Ausgangsstellung zurückzuschwenken. Es ergibt sich auf diese Weise eine bistabile Ventilfunktion.

Im Zusammenhang mit den Positioniermitteln 83 läßt sich die Ventileinrichtung 1 als fluidische Drossel nutzen, mit der sich unterschiedliche Strömungsquerschnitte vorgeben lassen. Dabei ist von Vorteil, daß der eingestellte Wert auch ohne Energieversorgung aufrechterhalten bleibt.

Schließlich besteht bei der erfindungsgemäßen Ventileinrichtung auch noch die Möglichkeit, eine Ansteuerelektronik einzusetzen, welche ein sanftes Ansteuern des vorzugsweise piezoelektrischen Biegeelementes 37 erlaubt, um die Steuerwippe sanft auf die steuerbaren Fluidkanalmündungen 25a, 25b bzw. die von diesen gebildeten Ventilsitze aufzusetzen. Dadurch wird der Verschleiß am Dichtmaterial und am Ventilsitz minimiert. Durch entsprechendes Optimieren des Schließ- bzw. Öffnungsvorganges, also insbesondere ein Abbremsen der Auslenkungsbewegung des Biegeelementes 37 im Nahbereich einer steuerbaren Fluidkanalmündung 25a, 25b und schnelle Bewegungen in der dazwischenliegenden Phase, lassen sich dennoch schnelle Schaltzeiten erreichen.

Die Ventileinrichtung 1 eignet sich zur Steuerung sämtlicher Fluide, wobei sie vor allem auf dem Pneumatiksektor vorteilhaft einsetzbar ist. Durch den erzielbaren toleranzgünstigen Aufbau ist eine volle Hubausnutzung des Biegeelementes möglich. Das Biegeelement 37 ist in der Grund- bzw. Ruhestellung des Ventils nicht mechanisch belastet, so daß an ihm keine mechanische Relaxation auftritt.

Sämtliche Details der Ventileinrichtung können für sich allein oder in beliebiger Kombination realisiert werden. So läßt sich beispielsweise die Ausgestaltung der Steuerwippe zum Beispiel hinsichtlich Lagerung, Realisierung der Federvorspannung oder Ausstattung mit einer Dichtmaterialschicht, auch bei einer Ventileinrichtung verwirklichen, bei der die Beaufschlagungskraft F_{B} auf andere Weise und beispielsweise mittels eines vorgespannten Biegeelementes aufgebracht wird. Entsprechendes gilt auch für die Positioniermittel.

## Patentansprüche

1. Ventileinrichtung, mit einem Ventilgehäuse (2), das eine Steuerkammer (8) begrenzt, in die mehrere Fluidkanäle (24) einmünden und in der eine zur Steuerung mindestens einer der Fluidkanalmündungen (25a, 25b) dienende, zwischen zwei Endpositionen (31a, 31b) schwenkbewegliche Steuerwippe (12) angeordnet ist, deren Schwenkposition durch ein elektrisch aktivierbares Biegeelement (37) beeinflussbar ist, das einenends gehäusefest verankert ist und zum anderen innerhalb der Steuerkammer (8) auf eine dort befindliche Betätigungspartie (42) der Steuerwippe (12) einwirken kann, wobei die Steuerwippe (12) ohne Mitwirkung des Biegeelementes (37) in eine erste der beiden Endpositionen (31a) vorgespannt ist, **dadurch gekennzeichnet, dass** die Steuerwippe (12) durch Federmittel (36) ständig in Richtung der ersten Endposition (31a) vorgespannt ist und dass das Biegeelement (37) im elektrisch unerregten Zustand im wesentlichen mechanisch spannungsfrei und ohne Federvorspannung sowie ohne feste Verbindung direkt an der Betätigungspartie (42) der die erste Endposition (31a) einnehmenden Steuerwippe (12) anliegt.

2. Ventileinrichtung nach Anspruch 1, **dadurch gekennzeichnet, dass** das Biegeelement (37) ein aus piezoelektrischem Material bestehendes Piezo-Biegeelement ist.

3. Ventileinrichtung nach Anspruch 1 oder 2, **dadurch gekennzeichnet, dass** die Steuerwippe (12) in der ersten Endposition (31a) eine steuerbare Fluidkanalmündung (25a, 25b) derart verschließt oder freigibt, dass die Ventileinrichtung (1) eine "normaly closed"-Charakteristik oder eine "normaly open"-Charakteristik aufweist.

4. Ventileinrichtung nach einem der Ansprüche 1 bis 3, **dadurch gekennzeichnet, dass** in der Steuerkammer (8) zwei durch die Steuerwippe (12) steuerbare Fluidkanalmündungen (25a, 25b) vorgesehen sind, die in den beiden Endpositionen (31a, 31b) der Steuerwippe (12) abwechselnd verschlossen und freigegeben werden, wobei das Verschließen der jeweils einen Fluidkanalmündung mit dem Freigeben der jeweils anderen Fluidkanalmündung einhergeht.

5. Ventileinrichtung nach Anspruch 4, **dadurch gekennzeichnet, daß** die beiden steuerbaren Fluidkanalmündungen (25a, 25b) von unterschiedlichen Wippenarmen (23a, 23b) der Steuerwippe (12) gesteuert werden.

6. Ventileinrichtung nach Anspruch 5, **dadurch gekennzeichnet, daß** die beiden steuerbaren Fluidkanalmündungen (25a, 25b) gemeinsam auf der gleichen Seite der Steuerwippe (12) gegenüberliegend einer Wippenfläche (27) plaziert sind, die sich über beide Wippenarme (23a, 23b) hinweg erstreckt und zugleich quer zur Schwenkachse (13) der Steuerwippe (12) orientiert ist.

7. Ventileinrichtung nach einem der Ansprüche 4 bis 6, **dadurch gekennzeichnet, daß** das Ventilgehäuse (2) mehrteilig ausgebildet ist, wobei die beiden steuerbaren Fluidkanalmündungen (25a, 25b) am gleichen Gehäuseteil (3a) vorgesehen sind und wobei die Steuerwippe (12) zweckmäßigerweise ausschließlich an dem die beiden steuerbaren Fluidkanalmündungen (25a, 25b) aufweisenden Gehäuseteil (3a) schwenkbeweglich gelagert sind.

8. Ventileinrichtung nach einem der Ansprüche 1 bis 7, **dadurch gekennzeichnet, daß** die Steuerwippe (12) in dem zur Steuerung mit der jeweiligen Fluidkanalmündung zusammenarbeitenden Bereich eine Dichtmaterialschicht (33a, 33b) trägt.

9. Ventileinrichtung nach Anspruch 8, **dadurch gekennzeichnet, daß** sich die Steuerwippe (12) mit ihrer die Dichtmaterialschicht (33a, 33b) tragenden Seite an einer gehäuseseitigen Lagerstelle (15) schwenkbeweglich abstützt, wobei sie im Abstützbereich eine hinsichtlich Material und Dicke der Dichtmaterialschicht entsprechende Materialschicht (35) trägt, die zweckmäßigerweise zusammenhängend mit der Dichtmaterialschicht (33a, 33b) ausgeführt ist.

10. Ventileinrichtung nach einem der Ansprüche 1 bis 9, **dadurch gekennzeichnet, daß** sich das Biegeelement (37) ausgehend von einer zur Steuerwippe (12) beabstandeten Befestigungsstelle (34) hin zur Steuerwippe (12) erstreckt, wobei es die Steuerwippe (12) auf der der mindestens einen zu steuernden Fluidkanalmündung (25a, 25b) entgegengesetzten Seite zumindest partiell übergreift.

11. Ventileinrichtung nach Anspruch 10, **dadurch gekennzeichnet, daß** die mit dem Biegeelement (37) zusammenarbeitende Betätigungspartie (42) der Steuerwippe (12) auf der der Befestigungsstelle (44) entgegengesetzten Seite der Schwenkachse (13) mit Abstand zu der Schwenkachse (13) angeordnet ist.

12. Ventileinrichtung nach Anspruch 11, **dadurch gekennzeichnet, daß** die Federmittel (36) auf der der Betätigungspartie (42) entgegengesetzten und vorzugsweise etwa diametral gegenüberliegenden Seite der Schwenkachse (13) an der Steuerwippe (12) angreifen.

13. Ventileinrichtung nach einem der Ansprüche 10 bis 12, **dadurch gekennzeichnet, daß** sich die Befestigungsstelle (44) in einer zur Steuerkammer (8) benachbarten Befestigungskammer (9) des Ventilgehäuses (2) befindet, in der das Biegeelement (37) mit seinem rückseitigen Endabschnitt (43) festgelegt ist und von der aus das Biegeelement (37) mit seinem vorderen Endabschnitt (35) in die Steuerkammer (8) hineinragt.

14. Ventileinrichtung nach einem der Ansprüche 1 bis 13, **dadurch gekennzeichnet, daß** die im elektrisch unerregten Zustand eingenommene Grundstellung des Biegeelementes (37) derjenigen Stellung entspricht, die das Biegeelement (37) beim Zusammenbau der Ventileinrichtung (1) allein auf Grund seiner Gewichtskraft einnimmt, nachdem es auf die Betätigungspartie (42) der Steuerwippe (12) und mindestens eine gehäuseseitige Lagerstelle (53) aufgelegt wurde.

15. Ventileinrichtung nach einem der Ansprüche 1 bis 14, **dadurch gekennzeichnet, daß** die Steuerwippe (12) zur Definition der Schwenkachse (13) auf einem ventilgehäuseseitigen Lagervorsprung (15) bezüglich diesem schwenkbeweglich aufliegt, wobei sie zu ihrer Lagefixierung unter Gewährleistung der Schwenkbeweglichkeit mit gehäuseseitigen Sicherungsmitteln (18) in Eingriff steht.

16. Ventileinrichtung nach einem der Ansprüche 1 bis 15, **dadurch gekennzeichnet, daß** die Federmittel (36) in ihrer Gesamtheit in der Steuerkammer (8) angeordnet sind.

17. Ventileinrichtung nach einem der Ansprüche 1 bis 16, **dadurch gekennzeichnet, daß** die Steuerwippe (12) durch die Federmittel (36) am Ventilgehäuse (2) gehalten wird.

18. Ventileinrichtung nach einem der Ansprüche 1 bis 17, **dadurch gekennzeichnet, daß** die Federmittel (36) mit zur Beaufschlagungskraft (F_{B}) des Biegeelementes (37) parallelgeschalteter Federkraft (F_{F}) auf die Steuerwippe (12) einwirken.

19. Ventileinrichtung nach einem der Ansprüche 1 bis 18, **dadurch gekennzeichnet, daß** die Federmittel (36) mindestens eine einerseits gehäusefest verankerte und andererseits an der Steuerwippe (12) angreifende Federzunge (57) enthalten.

20. Ventileinrichtung nach Anspruch 19, **dadurch gekennzeichnet, daß** die Federzunge (57) und die Steuerwippe (12) in einer Aufreihungsrichtung quer zur Schwenkachse (13) der Steuerwippe (12) aufeinanderfolgend angeordnet sind.

21. Ventileinrichtung nach Anspruch 20, **dadurch gekennzeichnet, daß** das Biegeelement (37) die Federzunge (57) und die Steuerwippe (12) mit zur Aufreihungsrichtung paralleler Ausrichtung übergreift.

22. Ventileinrichtung nach einem der Ansprüche 19 bis 21, **dadurch gekennzeichnet, daß** die Federzunge (57) Bestandteil einer Federeinheit (58) ist, die über einen die Federzunge (57) tragenden Verankerungsabschnitt (62) verfügt, mit dem sie gehäuseseitig fixiert ist.

23. Ventileinrichtung nach Anspruch 22, **dadurch gekennzeichnet, daß** der Verankerungsabschnitt (62) eine vorzugsweise Flachgestalt aufweisende Tragpartie (63) mit seitlichen, federelastischen Krallen (64) aufweist, wobei er über die Krallen (64) im Steuerraum (8) an der Wand des Ventilgehäuses (2) fixiert ist.

24. Ventileinrichtung nach einem der Ansprüche 1 bis 23, **dadurch gekennzeichnet, daß** die Federmittel (36) mit der Schwenkachse (13) gleichgerichtete stabähnliche Torsionsfederelemente (73) enthalten, die sich zwischen der Steuerwippe (12) und dem Ventilgehäuse (2) erstrecken, und die zweckmäßigerweise gleichzeitig die Schwenkachse (13) definieren.

25. Ventileinrichtung nach Anspruch 24, **dadurch gekennzeichnet, daß** an dem der Steuerwippe (12) entgegengesetzten Ende der Torsionsfederelemente (73) am Ventilgehäuse (2) fixierte Befestigungsteile (74) vorgesehen sind.

26. Ventileinrichtung nach Anspruch 25, **dadurch gekennzeichnet, daß** die Steuerwippe (12) mit den Torsionsfederelementen (73) und den Befestigungsteilen (74) als integrale Baueinheit (75) ausgeführt ist.

27. Ventileinrichtung nach Anspruch 25 oder 26, **dadurch gekennzeichnet, daß** die Befestigungsteile (74) zwischen beim Zusammenbau des Ventilgehäuses (2) auf sie einwirkenden Halteflächen (76, 77) zweier Gehäuseteile (3a, 3b) in einer derartigen Position gehalten sind, daß die Steuerwippe (12) in die erste Endposition (31) gezwungen und zusätzlich die Torsionsfederelemente (73) zur Erzeugung der gewünschten Vorspannung um einen gewissen Drehwinkel bezüglich ihrer vorspannungslosen Neutralstellung verdreht sind.

28. Ventileinrichtung nach Anspruch 27, **dadurch gekennzeichnet, daß** die Halteflächen (76, 77) bezüglich der Längsachse (14) des Ventilgehäuses (2) geneigt verlaufen.

29. Ventileinrichtung nach einem der Ansprüche 1 bis 28, **dadurch gekennzeichnet, daß** das Ventilgehäuse (2) ein einen Boden (4) und eine umlaufende Seitenwand (5) enthaltendes Unterteil (3a) sowie ein einen Deckel bildendes Oberteil (3b) aufweist, zwischen denen der Steuerraum (8) definiert ist.

30. Ventileinrichtung nach Anspruch 29 in Verbindung mit Anspruch 27 oder 28, **dadurch gekennzeichnet, daß** die mit einem jeweiligen Befestigungsteil (74) zusammenwirkenden Halteflächen (76, 77) zum einen am Unterteil (3a) und zum anderen am Oberteil (3b) vorgesehen sind.

31. Ventileinrichtung nach einem der Ansprüche 1 bis 30, **dadurch gekennzeichnet, daß** das Biegeelement (37) Bestandteil einer Antriebseinrichtung (82) für die Steuerwippe (12) ist, die außerdem über Positioniermittel (83) verfügt, die ein schrittweises Verschwenken der Steuerwippe (12) ermöglichen, und die beispielsweise einen Sperrklinkenmechanismus oder einen Selbsthemmungsmechanismus definieren.

32. Ventileinrichtung nach einem der Ansprüche 1 bis 31, **dadurch gekennzeichnet, daß** zusätzlich zu der die Steuerwippe (12) und die Federmittel (36) enthaltenden ersten Steuereinheit (67) eine entsprechend aufgebaute und zur Steuerung mindestens einer weiteren Fluidkanalmündung dienende zweite Steuereinheit (68) vorgesehen ist, wobei die Steuerwippen (12) beider Steuereinheiten (67, 68) durch das Biegeelement (37) betätigbar sind.

33. Ventileinrichtung nach Anspruch 32, **dadurch gekennzeichnet, daß** die beiden Steuereinheiten (67, 68) bezüglich der Erstreckungsebene (69) des Biegeelementes (37) spiegelsymmetrisch beidseits des Biegeelementes (37) angeordnet sind.

34. Ventileinrichtung nach einem der Ansprüche 1 bis 33, **gekennzeichnet durch** Einstellmittel (72) zur veränderlichen Vorgabe der bezüglich der zu steuernden Fluidkanalmündungen (25a, 25b) eingenommenen Position der Schwenkachse (13) der Steuerwippe (12).

35. Ventileinrichtung nach einem der Ansprüche 1 bis 34, **dadurch gekennzeichnet, daß** die Betriebsspannung für das Biegeelement (37) zum Zwecke des Erhalts eines stetigen Steuerverhaltens der Steuerwippe (12) stufenlos aufbringbar ist.

## Claims

1. Valve device, comprising a valve housing (2), which delimits a control chamber (8), into which a plurality of fluid ducts (24) open and in which a control rocker (12) is arranged which serves to control at least one of the fluid duct openings (25a, 25b) and is pivotally movable between two end positions (31 a, 31 b), its pivotal position being able to be influenced by an electrically activatable flexible element (37) which is anchored at one end so as to be fixed to the housing and, at the other end, can act within the control chamber (8) on an actuating portion (42) of the control rocker (12) located there, wherein the control rocker (12) is biased into a first of the two end positions (31a) without involvement of the flexible element (37), **characterised in that** the control rocker (12) is constantly biased by spring means (36) in the direction of the first end position (31 a) and **in that** the flexible element (37) in the electrically non-excited state rests directly on the actuating portion (42) of the control rocker (12) adopting the first end position (31a), substantially mechanically free of tension and without spring biasing as well as without a rigid connection.

2. Valve device according to claim 1, **characterised in that** the flexible element (37) is a piezoelectric flexible element consisting of piezoelectric material.

3. Valve device according to claim 1 or 2, **characterised in that**, in the first end position (31a), the control rocker (12) closes or opens a controllable fluid duct opening (25a, 25b) in such a way that the valve device (1) has a "normally closed" characteristic or a "normaity open" characteristic.

4. Valve device according to any one of claims 1 to 3, **characterised in that** two fluid duct openings (25a, 25b), which can be controlled by the control rocker (12) and which in the two end positions (31a, 31b) of the control rocker (12) are alternately closed and opened, are provided in the control chamber (8), wherein the closing of the one respective fluid duct opening is accompanied by the opening of the other respective fluid duct opening.

5. Valve device according to claim 4, **characterised in that** the two controllable fluid duct openings (25a, 25b) are controlled by different rocker arms (23a, 23b) of the control rocker (12).

6. Valve device according to claim 5, **characterised in that** the two controllable fluid duct openings (25a, 25b) are placed together on the same side of the control rocker (12) opposing a rocker face (27), which extends over the two rocker arms (23a, 23b) and is simultaneously oriented transverse to the pivot axis (13) of the control rocker (12).

7. Valve device according to any one of claims 4 to 6, **characterised in that** the valve housing (2) is of multi-part construction, the two controllable fluid duct openings (25a, 25b) being provided on the same housing part (3a) and the control rocker (12) being expediently mounted so as to pivot exclusively on the housing part (3a) having the two controllable fluid duct openings (25a, 25b).

8. Valve device according to any one of claims 1 to 7, **characterised in that** the control rocker (12) has a sealing material layer (33a, 33b) in the region cooperating for control with the respective fluid duct opening.

9. Valve device according to claim 8, **characterised in that** the control rocker (12) with its side carrying the sealing material layer (33a, 33b) is pivotally supported on a bearing point (15) on the housing side, wherein, in the support area, it carries a material layer (35) which corresponds with respect to material and thickness to the sealing material layer and which is expediently connected to the sealing material layer (33a, 33b).

10. Valve device according to any one of claims 1 to 9, **characterised in that** the flexible element (37) extends from a fastening point (34) spaced from the control rocker (12) toward the control rocker (12), wherein it at least partially overlaps the control rocker (12) on the side opposing the at least one fluid duct opening (25a, 25b) to be controlled.

11. Valve device according to claim 10, **characterised in that** the actuating portion (42) of the control rocker (12) cooperating with the flexible element (37) is arranged on the side of the pivot axis (13) opposing the fastening point (44) at a spacing from the pivot axis (13).

12. Valve device according to claim 11, **characterised in that** the spring means (36) act on the control rocker (12) on the side of the pivot axis (13) opposing the actuating portion (42) and preferably approximately diametrically opposite.

13. Valve device according to any one of claims 10 to 12, **characterised in that** the fastening point (44) is located in a fastening chamber (9) of the valve housing (2) adjacent to the control chamber (8), in which fastening chamber (9) the flexible element (37) is fixed by its rear end section (43) and from which the flexible element (37) with its front end section (35) projects into the control chamber (8).

14. Valve device according to any one of claims 1 to 13, **characterised in that** the basic position of the flexible element (37) adopted in the electrically non-excited state corresponds to the position which the flexible element (37) adopts during assembly of the valve device (1) purely owing to its weight, once it has been placed onto the actuating portion (42) of the control rocker (12) and at least one bearing point (53) on the housing side.

15. Valve device according to any one of claims 1 to 14, **characterised in that** for definition of the pivot axis (13), the control rocker (12) rests on a bearing projection (15) on the valve housing side so as to be able to pivot with respect thereto, wherein it engages with securing means (18) on the housing side to secure its position while ensuring pivoting mobility.

16. Valve device according to any one of claims 1 to 15, **characterised in that** the spring means (36) are arranged in their entirety in the control chamber (8).

17. Valve device according to any one of claims 1 to 16, **characterised in that** the control rocker (12) is held on the valve housing (2) by the spring means (36).

18. Valve device according to any one of claims 1 to 17, **characterised in that** the spring means (36) act on the control rocker (12) with a spring force (F_{F}) connected in parallel to the loading force (F_{B}) of the flexible element (37).

19. Valve device according to any one of claims 1 to 18, **characterised in that** the spring means (36) contain at least one spring tongue (57) which is anchored, on the one hand, to the housing and, on the other hand, acts on the control rocker (12).

20. Valve device according to claim 19, **characterised in that** the spring tongue (57) and the control rocker (12) are arranged one after the other in an alignment direction transverse to the pivot axis (13) of the control rocker (12).

21. Valve device according to claim 20, **characterised in that** the flexible element (37) overlaps the spring tongue (57) and the control rocker (12) with an orientation parallel to the alignment direction.

22. Valve device according to any one of claims 19 to 21, **characterised in that** the spring tongue (57) is a component of a spring unit (58) which has an anchoring section (62) carrying the spring tongue (57), to which anchoring section (62) it is fixed on the housing side.

23. Valve device according to claim 22, **characterised in that** the anchoring section (62) has a carrying portion (63) preferably having a flat design, comprising lateral spring-elastic claws (64), the anchoring section (62) being fixed via the claws (64) in the control space (8) to the wall of the valve housing (2).

24. Valve device according to any one of claims 1 to 23, **characterised in that** the spring means (36) contain rod-like torsion spring elements (73) which are aligned in the same direction as the pivot axis (13), these torsion spring elements (73) extending between the control rocker (12) and the valve housing (2) and expediently simultaneously defining the pivot axis (13).

25. Valve device according to claim 24, **characterised in that** fastening parts (74) fixed to the valve housing (2) are provided at the end of the torsion spring elements (73) opposing the control rocker (12).

26. Valve device according to claim 25, **characterised in that** the control rocker (12) is designed as an integral constructional unit (75) with the torsion spring elements (73) and the fastening parts (74).

27. Valve device according to claim 25 or 26, **characterised in that** the fastening parts (74) are held between holding faces (76, 77) of two housing parts (3a, 3b) acting on them during assembly of the valve housing (2) in a position such that the control rocker (12) is forced into the first end position (31) and, in addition, the torsion spring elements (73) are rotated about a specific angle of rotation with respect to their bias-free neutral position to generate the desired bias.

28. Valve device according to claim 27, **characterised in that** the holding faces (76, 77) extend in a tilted manner with respect to the longitudinal axis (14) of the valve housing (2).

29. Valve device according to any one of claims 1 to 28, **characterised in that** the valve housing (2) has a lower part (3a) containing a base (4) and a peripheral side wall (5) as well as an upper part (3b) forming a lid, between which the control space (8) is defined.

30. Valve device according to claim 29, in conjunction with claim 27 or 28, **characterised in that** the holding faces (76, 77) cooperating with a respective fastening part (74) are provided, on the one hand, on the lower part (3a) and, on the other hand, on the upper part (3b).

31. Valve device according to any one of claims 1 to 30, **characterised in that** the flexible part (37) is a component of a drive device (82) for the control rocker (12), which also has positioning means (83) which allow a step-wise pivoting of the control rocker (12) and which, for example, define a ratchet mechanism or a self-locking mechanism.

32. Valve device according to any one of claims 1 to 31, **characterised in that** in addition to the first control unit (67) containing the control rocker (12) and the spring means (36), a correspondingly constructed second control unit (68) is provided serving to control at least one further fluid duct opening, the control rockers (12) of the two control units (67, 68) being actuable by means of the flexible element (37).

33. Valve device according to claim 32, **characterised in that** the two control units (67, 68) are arranged mirror-symmetrically on either side of the flexible elements (37) with respect to the plane (69) of extent of the flexible elements (37).

34. Valve device according to any one of claims 1 to 33, **characterised by** adjustment means (72) for variable stipulation of the position of the pivot axis (13) of the control rocker (12) adopted with respect to the fluid duct openings (25a, 25b) to be controlled.

35. Valve device according to any one of claims 1 to 34, **characterised in that** the operating voltage for the flexible element (37) can be applied steplessly for the purpose of obtaining constant control behaviour of the control rocker (12).

## Revendications

1. Agencement de soupape avec un boîtier de soupape (2) délimitant un compartiment de commande (8) dans lequel aboutissent plusieurs canaux à fluide (24) et dans lequel est disposée une bascule de commande (12) pouvant pivoter entre deux positions extrêmes (31 a, 31 b), servant à la commande d'au moins une des embouchures de canaux à fluide (25a, 25b) et dont la position de pivotement peut être influencée par un élément déformable par flexion (37) pouvant être activé électriquement, lequel est ancré à une extrémité en solidarité avec le boîtier et peut agir de l'autre côté à l'intérieur du compartiment de commande (8) sur une partie d'actionnement (42) de la bascule de commande (12) se trouvant à cet endroit, la bascule de commande (12) étant, sans le concours de l'élément déformable par flexion (37), mise en précontrainte dans une première des deux positions extrêmes (31 a), **caractérisé en ce que** la bascule de commande (12) est constamment tenue en précontrainte en direction de la première position extrême (31 a) par des moyens à ressort (36) et **en ce que**, dans l'état de non-excitation électrique, l'élément déformable par flexion (37) repose sensiblement sans contrainte mécanique et sans précontrainte par un ressort ainsi que sans liaison fixe directement sur la partie d'actionnement (42) de la bascule de commande (12) se trouvant dans la première position extrême (31 a).

2. Agencement de soupape selon la revendication 1, **caractérisé en ce que** l'élément déformable par flexion (37) est un élément déformable par flexion piézo-électrique se composant de matériau piézo-électrique.

3. Agencement de soupape selon la revendication 1 ou 2, **caractérisé en ce que**, dans la première position extrême (31 a), la bascule de commande (12) ferme ou libère de telle façon une embouchure de canal à fluide pouvant être commandée (25a, 25b) que l'agencement de soupape (1) comprenne une caractéristique "normalement fermée" ou une caractéristique "normalement ouverte".

4. Agencement de soupape selon l'une des revendications 1 à 3, **caractérisé en ce que** dans le compartiment de commande (8) sont prévues deux embouchures de canaux à fluide (25a, 25b) pouvant être commandées par la bascule de commande (12) et qui, dans les deux positions extrêmes (31 a, 31 b) de la bascule de commande (12), sont alternativement fermées et libérées, la fermeture de l'une des embouchures de canaux à fluide respective allant de pair avec la libération de l'autre embouchure de canaux à fluide respective.

5. Agencement de soupape selon la revendication 4, **caractérisé en ce que** les deux embouchures de canaux à fluide pouvant être commandées (25a, 25b) sont commandées par des bras de bascule différents (23a, 23b) de la bascule de commande (12).

6. Agencement de soupape selon la revendication 5, **caractérisé en ce que** les deux embouchures de canaux à fluide (25a, 25b) pouvant être commandées sont placées en commun sur le même côté de la bascule de commande (12) et en face d'une surface de bascule (27) qui s'étend le long des deux bras de bascule (23a, 23b) et qui est en même temps orientée transversalement à l'axe de pivotement (13) de la bascule de commande (12).

7. Agencement de soupape selon l'une des revendications 4 à 6, **caractérisé en ce que** le boîtier de soupape (2) est configuré en plusieurs parties, les deux embouchures de canaux à fluide pouvant être commandées (25a, 25b) étant prévues sur la même partie de boîtier (3a) et la bascule de commande (12) étant de manière avantageuse montée de façon pivotante exclusivement sur la partie de boîtier (3a) comprenant les deux embouchures de canaux à fluide pouvant être commandées (25a, 25b).

8. Agencement de soupape selon l'une des revendications 1 à 7, **caractérisé en ce que** la bascule de commande (12) comprend une couche de matériau d'étanchéité (33a, 33b) dans la zone qui, pour assurer la commande, coopère avec l'embouchure de canal à fluide respective.

9. Agencement de soupape selon la revendication 8, **caractérisé en ce que** la bascule de commande (12) s'appuie de manière pivotante avec son côté portant la couche de matériau d'étanchéité (33a, 33b) sur un point d'appui (15) situé du côté du boîtier, tandis qu'elle porte dans la zone de l'appui une couche de matériau (35) qui, du point de vue du matériau et de l'épaisseur, correspond à la couche de matériau d'étanchéité et qui est avantageusement réalisée de manière cohérente avec la couche de matériau d'étanchéité (33a, 33b).

10. Agencement de soupape selon l'une des revendications 1 à 9, **caractérisé en ce qu'**à partir d'un point de fixation (34) espacé par rapport à la bascule de commande (12), l'élément déformable par flexion (37) s'étend en direction de la bascule de commande (12), tandis que, sur le côté opposé à l'au moins une embouchure de canal à fluide (25a, 25b) devant être commandée, il passe au moins partiellement par-dessus la bascule de commande (12).

11. Agencement de soupape selon la revendication 10, **caractérisé en ce que** la partie d'actionnement (42) de la bascule de commande (12) coopérant avec l'élément déformable par flexion (37) est disposée, avec un espacement par rapport à l'axe de pivotement (13), sur le côté de l'axe de pivotement (13) qui est opposé au point de fixation (44).

12. Agencement de soupape selon la revendication 11, **caractérisé en ce que** les moyens à ressort (36) agissent sur la bascule de commande (12), sur le côté de l'axe de pivotement (13) qui est opposé à la partie d'actionnement (42) et qui se situe de préférence de manière diamétralement opposée.

13. Agencement de soupape selon l'une des revendications 10 à 12, **caractérisé en ce que** le point de fixation (44) se trouve dans un compartiment de fixation (9) du boîtier de soupape (2) qui est voisin du compartiment de commande (8), dans lequel l'élément déformable par flexion (37) est fixé par sa section terminale arrière (43) et à partir duquel l'élément déformable par flexion (37) pénètre par sa section terminale avant (35) dans le compartiment de commande (8).

14. Agencement de soupape selon l'une des revendications 1 à 13, **caractérisé en ce que** la position de base prise par l'élément déformable par flexion (37) dans son état de non-excitation électrique correspond à la position que prend l'élément déformable par flexion (37) du fait de son seul poids lors de l'assemblage de l'agencement de soupape (1), et ceci après qu'il ait été posé sur la partie d'actionnement (42) de la bascule de commande (12) et sur au moins un point d'appui (53) situé du côté du boîtier.

15. Agencement de soupape selon l'une des revendications 1 à 14, **caractérisé en ce que**, pour la définition de l'axe de pivotement (13), la bascule de commande (12) repose sur une avancée d'appui (15) située du côté du boîtier de soupape en étant mobile en pivotement par rapport à celle-ci, alors que, pour son blocage en position tout en garantissant la mobilité en pivotement, elle est en prise avec des moyens de blocage (18) situés de côté du boîtier.

16. Agencement de soupape selon l'une des revendications 1 à 15, **caractérisé en ce que** les moyens à ressort (36) sont disposés dans leur totalité dans le compartiment de commande (8).

17. Agencement de soupape selon l'une des revendications 1 à 16, **caractérisé en ce que** la bascule de commande (12) est maintenue sur le boîtier de soupape (2) par les moyens à ressort (36).

18. Agencement de soupape selon l'une des revendications 1 à 17, **caractérisé en ce que** les moyens à ressort (36) agissent sur la bascule de commande (12) avec une force de ressort (F_{F}) appliquée en parallèle avec la force (F_{B}) imposée par l'élément déformable par flexion (37).

19. Agencement de soupape selon l'une des revendications 1 à 18, **caractérisé en ce que** les moyens à ressort (36) comprennent au moins une languette souple (57) ancrée d'une part en solidarité avec le boîtier et agissant d'autre part sur la bascule de commande (12).

20. Agencement de soupape selon la revendication 19, **caractérisé en ce que** la languette souple (57) et la bascule de commande (12) sont disposées l'une après l'autre dans une direction d'alignement transversale à l'axe de pivotement (13) de la bascule de commande (12).

21. Agencement de soupape selon la revendication 20, **caractérisé en ce que** l'élément déformable par flexion (37) passe par-dessus la languette souple (57) et la bascule de commande (12) avec une orientation parallèle à la direction d'alignement.

22. Agencement de soupape selon l'une des revendications 19 à 21, **caractérisé en ce que** la languette souple (57) est une partie constituante d'une unité de ressort (58) qui dispose d'une section d'ancrage (62) portant la languette souple (57), par laquelle elle est fixée du côté du boîtier.

23. Agencement de soupape selon la revendication 22, **caractérisé en ce que** la section d'ancrage (62) comprend une partie portante (63) ayant de préférence un profil plat avec des griffes latérales élastiquement déformables (64), tandis que, dans le compartiment de commande (8), elle est fixée par l'intermédiaire des griffes (64) sur la paroi du boîtier de soupape (2).

24. Agencement de soupape selon l'une des revendications 1 à 23, **caractérisé en ce que** les moyens à ressort (36) comprennent des éléments de ressort de torsion (73) semblables à des barres, qui sont orientés dans le même sens que l'axe de pivotement (13) et qui s'étendent entre la bascule de commande (12) et le boîtier de soupape (2) et qui définissent en même temps avantageusement l'axe de pivotement (13).

25. Agencement de soupape selon la revendication 24, **caractérisé en ce qu'**à l'extrémité des éléments de ressort de torsion (73) opposée à la bascule de commande (12) sont prévues des pièces de fixation (74) fixées sur le boîtier de soupape (2).

26. Agencement de soupape selon la revendication 25, **caractérisé en ce que** la bascule de commande (12) est réalisée comme unité constructive d'un seul tenant (75) comprenant les éléments de ressort de torsion (73) et les pièces de fixation (74).

27. Agencement de soupape selon la revendication 25 ou 26, **caractérisé en ce que** les pièces de fixation (74) sont maintenues dans une position telle entre des surfaces de maintien (76, 77) de deux parties de boîtier (3a, 3b), agissant sur elles lors de l'assemblage du boîtier de soupape (2), que la bascule de commande (12) est forcée dans la première position (31) et que, pour générer la précontrainte souhaitée, les éléments de ressort de torsion (73) sont en outre tournés d'un angle de rotation déterminé par rapport leur position neutre hors tension.

28. Agencement de soupape selon la revendication 27, **caractérisé en ce que** les surfaces de maintien (76, 77) s'étendent avec une inclinaison par rapport à l'axe longitudinal (14) du boîtier de soupape (2).

29. Agencement de soupape selon l'une des revendications 1 à 28, **caractérisé en ce que** le boîtier de soupape (2) comprend une partie inférieure (3a) englobant un fond (4) et une paroi latérale périphérique (5) ainsi qu'une partie supérieure (3b) formant un couvercle, entre lesquelles est défini le compartiment de commande (8).

30. Agencement de soupape selon la revendication 29 en liaison avec la revendication 27 ou 28, **caractérisé en ce que** les surfaces de maintien (76, 77) coopérant avec une pièce de fixation respective (74) sont prévues d'une part à la partie inférieure (3a) et d'autre part à la partie supérieure (3b).

31. Agencement de soupape selon l'une des revendications 1 à 30, **caractérisé en ce que** l'élément déformable par flexion (37) est une partie constituante d'un dispositif d'entraînement (82) pour la bascule de commande (12), qui dispose en outre de moyens de positionnement (83), qui permettent un pivotement pas à pas de la bascule de commande (12) et qui définissent par exemple un mécanisme à cliquet ou un mécanisme autobloquant.

32. Agencement de soupape selon l'une des revendications 1 à 31, **caractérisé en ce qu'**en plus de la première unité de commande (67) comprenant la bascule de commande (12) et les moyens à ressort (36), est prévue une deuxième unité de commande (68) conçue de manière correspondante et servant à la commande d'au moins une autre embouchure de canal à fluide, les bascules de commande (12) des deux unités de commande (67, 68) pouvant être actionnées par l'élément déformable par flexion (37).

33. Agencement de soupape selon la revendication 32, **caractérisé en ce qu'**en ce que, par rapport au plan d'extension (69) de l'élément déformable par flexion (37), les deux unités de commande (67, 68) sont disposées en symétrie par réflexion des deux côtés de l'élément déformable par flexion (37).

34. Agencement de soupape selon l'une des revendications 1 à 33, **caractérisé par** des moyens de réglage (72) pour imposer des consignes modifiables concernant la position de l'axe de pivotement (13) de la bascule de commande (12) qui est prise par rapport aux embouchures de canaux à fluide (25a, 25b) devant être commandées.

35. Agencement de soupape selon l'une des revendications 1 à 34, **caractérisé en ce que** la précontrainte de service de l'élément déformable par flexion (37) servant à la conservation d'une fonction de commande constante de la bascule de commande (12) peut être produite de manière continue.
